# EUROPÄISCHE PATENTANMELDUNG

(11) **EP 4 159 297 A1**
(43) Veröffentlichungstag der Anmeldung: **05.04.2023**
(21) Anmeldenummer: 22198784.5
(22) Anmeldetag: 29.09.2022
(51) Int. Cl.: B01D 45/08, F01M 13/00, F01M 13/04

(54) **PARTIKELABSCHEIDER ZUM REINIGEN EINES MIT PARTIKELN BELADENEN GASSTROMS**

(30) Priorität: 01.10.2021 DE 102021125569
(71) Anmelder: WOCO Industrietechnik GmbH, 63628 Bad Soden-Salmünster (DE)
(72) Erfinder: Fenske, Sebastian, 63571 Gelnhausen (DE)
(74) Vertreter: Schmid, Nils T.F.

(57) **Zusammenfassung**

Die Erfindung betrifft einen Partikelabscheider zum Reinigen eines mit Partikeln, wie Fluidpartikeln, beladenen Gasstroms, wobei der Partikelabscheider einen Gasstrom-Eingang, an dem der Gasstrom mit einer Einströmrichtung in den Partikelabscheider gelangt, einen Gasstrom-Ausgang, an dem der Gasstrom den Partikelabscheider verlässt, einen Schließzustand, in dem bis auf eine Leckageströmung eine Gasströmung vom Gasstrom-Eingang zum Gasstrom-Ausgang unterbunden ist, wenigstens einen Öffnungszustand, in dem zusätzlich zur Leckageströmung eine Großvolumenströmung vom Gasstrom-Eingang zum Gasstrom-Ausgang zugelassen ist, einen zwischen dem Gasstrom-Eingang und dem Gasstrom-Ausgang angeordneten Ablenkleitungskanal, der die Großvolumenströmung und/oder die Leckageströmung um wenigstens 90° in Bezug auf die Einströmrichtung ablenkt, und ein Textil, insbesondere Vlies, umfasst, das derart angeordnet ist, dass wenigstens ein Teil der abgelenkten Großvolumenströmung und/oder der abgelenkten Leckageströmung auf das Textil trifft.

## Beschreibung

Die vorliegende Erfindung betrifft einen Partikelabscheider zum Reinigen eines mit Partikeln, wie Fluidpartikeln, beladenen Gasstroms. Der Partikelabscheider kann insbesondere zum Reinigen eines mit Wasserpartikeln beladenen Anodenstroms einer Brennstoffzelle und/oder von mit Ölpartikeln beladenem Blow-By-Gas einer Kurbelgehäuseentlüftung eines Kraftfahrzeugmotors eingesetzt werden. Die Erfindung betrifft ferner ein Partikelabscheidungssystem mit zwei fluidal miteinander in Verbindung stehenden Partikelabscheidern. Außerdem betriff die Erfindung ein Verfahren zum Reinigen von eines mit Partikeln beladenen Gasstroms mit dem Partikelabscheider oder dem Partikelabscheidersystem. Ferner betrifft die Erfindung ein Brennstoffzellensystem mit dem Partikelabscheider und ein Brennstoffzellenfahrzeug sowie ein Kurbelgehäuseentlüftungssystem für ein Kraftfahrzeug.

Generell sind Partikelabscheider im Stand der Technik bekannt. Es existieren im Allgemeinen zwei Gattungen von Abscheidern, nämlich aktive Abscheider und passive Abscheider. Aktive Abscheider kennzeichnen sich dadurch, dass zusätzliche Energie aufgewendet wird, mit welcher die Partikel beaufschlagt werden, um eine erhöhte Effizienz bei der Abscheidung zu erzielen. Beispielsweise ist ein Elektro-Abscheidungssystem bekannt, bei dem Partikel elektrisch aufgeladen werden, sodass diese von einer gegenpoligen Oberfläche angezogen und anschließend abgeschieden werden können. Bei passiven Abscheidern wird keine zusätzliche Energie in das System eingebracht. Beispielsweise nutzen passive Abscheider die kinetische Energie der Gasströmung. Die Partikel werden dabei beispielsweise durch ein Labyrinth oder einen Zyklon geleitet und somit durch die Massenträgheit der Partikel von der Gasströmung separierbar, wodurch die Partikel aus dem Gasstrom abgeführt werden können, welcher dann bereinigt ist. Insbesondere bei Ölabscheidern werden die Ölpartikel in den Ölkreislauf zurückgeführt und der gereinigte Gasstrom in die Ansaugluft des Kraftfahrzeugmotors zurückgeführt.

Aus WO 2016/184768 ist beispielsweise eine Vorrichtung zur Abscheidung von Partikeln aus einem Gasstrom bekannt. Der Abscheider wird an einer Unterseite, welche einen Strömungseintritt definiert, von der Gasströmung angeströmt. Der Strömungseintritt mündet in einen Strömungskanal, welcher durch ein die Unterseite des Abscheiders bildendes Strömungsleitelement sowie ein relativ zu diesem bewegbares und in den Strömungseintritt hineinragendes Ventilglied definiert ist. Das Strömungsleitelement und das Ventilglied sind dabei derart dimensioniert und bezüglich einander angeordnet, dass die Gasströmung beim Durchlaufen des Strömungskanals umgelenkt wird, um den Abscheidegrad, also die Effizienz des Abscheiders, zu erhöhen. Der darin beschriebene Ölabscheider stößt allerdings aufgrund der sich verschärfenden gesetzlichen und umweltrelevanten Regulierungen und Forderungen in Bezug auf die Abscheiderate und die damit einhergehende Effizienz des Abscheiders an seine Grenzen.

Des Weiteren ist aus DE 20 2010 001 191 U1 eine Ölabscheideeinrichtung bekannt, bei der ein Vlies zur Ölabscheidung eingesetzt wird. Das Ventilglied ist als ebener Ventilteller mit Durchtrittsbohrungen zum Ermöglichen einer Leckageströmung im geschlossenen Ventilglied-Zustand ausgebildet. Das Vlies ist gemäß DE 20 2010 001 191 U1 entweder derart in dem Ventilraum angeordnet, dass es der Leckageströmung ausgesetzt ist oder bei geöffnetem Ventilglied im Wesentlichen tangential angeströmt wird. An der Ölabscheideeinrichtung gemäß DE 20 2010 001 191 U1 hat sich zum einen die beschränkte Abscheidewirkung des Vlies als nachteilig erwiesen. Zum anderen tendieren die Vliese dazu, zu versotten und mit Partikeln zugesetzt zu werden, was deren Abscheidewirkung zunehmend verringert und gegebenenfalls eine Wartung bzw. einen Austausch des Vlies erfordert.

Schließlich offenbart die Veröffentlichungsschrift DE 10 2018 124 654 A1 der Anmelderin einen Ölabscheider mit einem federbelasteten rotationsförmigen Ventilglied und einem Vlies an einem Deckelgehäuseteil stromabwärts des Ventilglieds. Die Erfinder der vorliegenden Erfindung haben herausgefunden, dass weiterhin Potenziale bzgl. der Abscheideeffektivität bestehen. Vor allem hat sich herausgestellt, dass bei Volumenströmen von mehr als 30 l/min, insbesondere von mehr als 70 l/min, die Abscheiderate verbesserungsfähig ist, da das Vlies des Deckelgehäuseteils mehr oder weniger umgangen wird. Des Weiteren hat sich eine zunehmende Versottung des Vlieses als nachteilig erwiesen.

Es ist Aufgabe der vorliegenden Erfindung, die Nachteile aus dem bekannten Stand der Technik zu verbessern, insbesondere einen Partikelabscheider zum Reinigen eines mit Partikeln beladenen Gasstroms, ein Partikelabscheidungssystem mit zwei Partikelabscheidern, ein Verfahren zum Reinigen von eines mit Partikeln beladenen Gasstroms mit dem Partikelabscheider oder dem Partikelabscheidungssystem, ein Brennstoffzellensystem und ein Kurbelgehäuseentlüftungssystem mit einer verbesserten Abscheiderate bereitzustellen, die insbesondere auch bei größeren Volumenströmen verbessert ist.

Diese Aufgabe wird durch die Merkmale der unabhängigen Ansprüche gelöst.

Demnach ist gemäß einem Aspekt der Erfindung ein Partikelabscheider zum Reinigen eines mit Partikeln, wie Fluidpartikeln, beladenen Gasstroms vorgesehen. Insbesondere ist der Partikelabscheider ein Ölabscheider oder Wasserabscheider. Der Partikelabscheider kann geeignet sein Ölpartikel und/oder Wasserpartikel abzuscheiden. Der Gasstrom kann insbesondere ein wasserbeladener Gasstrom, insbesondere ein Anodenstrom einer Brennstoffzelle, oder ein mit Ölpartikeln beladener Gasstrom, insbesondere ein Blow-By-Gasstrom, sein.

Der Partikelabscheider umfasst einen Gasstromeingang, an dem der Gasstrom mit einer Einströmrichtung in den Partikelabscheider gelangt. Insbesondere ist der Gasstromeingang in einem Anströmgehäuseteil des Partikelabscheiders ausgebildet. Unter einem Anströmgehäuseteil ist insbesondere der Teil des Gehäuses eines Partikelabscheiders zu verstehen, der von dem auf den Partikelabscheider zuströmenden Gasstrom angeströmt wird. Der Gasstromeingang ist insbesondere als Durchtrittsöffnung in dem Anströmgehäuseteil ausgebildet.

Der Partikelabscheider umfasst ferner einen Gasstromausgang, an dem der Gasstrom den Partikelabscheider verlässt. Der Gasstromausgang kann insbesondere als Austrittsöffnung im Gehäuse des Partikelabscheiders ausgebildet sein. Insbesondere ist der Gasstrom-Ausgang zwischen einem Anströmgehäuseteil und einem Deckelgehäuseteil des Partikelabscheiders ausgebildet. Insbesondere ist der Gasstromausgang stromabwärts des nachfolgend beschriebenen Ventilgliedes, Ventilsitzes und/oder Textils angeordnet. Insbesondere sind der Gasstromeingang und der Gasstromausgang derart zueinander angeordnet, dass der Gasstrom den Gasstromausgang in einer Ausströmrichtung verlässt, die gegenüber der Einströmrichtung um wenigstens 30°, 40°, 50°, 60°, 70° oder 80°, insbesondere um 90°, geneigt ist.

Der Partikelabscheider umfasst einen Schließzustand, in dem bis auf eine Leckage-Strömung eine Gasströmung vom Gaseingang zum Gasausgang unterbunden ist. Unter einer Leckage-Strömung ist insbesondere ein Volumenstrom von wenigstens 1 l/min, 3 l/min, 5 l/min, 7 1/min, 10 l/min oder 12 l/min und/oder höchstens 15 l/min, 20 l/min, 25 l/min, 30 l/min, 35 l/min oder 40 l/min zu verstehen. Insbesondere kann die Leckage-Strömung mehrere Leckage-Teilgasströme aufweisen. Insbesondere können die mehreren Leckage-Teilgasströme im Partikelabscheider unterschiedlich stark abgelenkt werden.

Ferner umfasst der Partikelabscheider wenigstens einen Öffnungszustand, in dem zusätzlich zur lokalen Strömung eine Großvolumenströmung vom Gasstromeingang zum Gasstromausgang zugelassen ist. Unter einer Großvolumenströmung ist insbesondere eine Volumenströmung von mehr als 20 l/min, 30 l/min, 40 l/min, 50 l/min, 60 l/min, 80 l/min oder 100 l/min zu verstehen.

Insbesondere weist der Partikelabscheider ein Ventilglied und einen Ventilsitz auf. Insbesondere steht das Ventilglied im Schließzustand mit dem Ventilsitz in einem radialen und/oder axialen Anschlagkontakt. Im Schließzustand wird die Leckage-Strömung insbesondere durch eine Konturierung des Ventilsitzes und/oder des Ventilglieds im Bereich des axialen und/oder radialen Anschlagkontakts zugelassen. Insbesondere kann dazu der radiale und/oder axiale Anschlagkontakt des Ventilsitzes eine ebene Kontaktfläche bereitstellen, während die entsprechende Kontaktfläche des Ventilglieds eine konturierte, insbesondere mit Vertiefungen oder Aussparungen versehene, Kontaktfläche aufweist. Alternativ kann die konturierte Kontaktfläche am Ventilsitz und die ebene Kontaktfläche am Ventilglied ausgebildet sein.

Alternativ oder zusätzlich kann die Leckage-Strömung durch Durchtrittsöffnungen im Ventilglied und/oder im Ventilsitz ermöglicht werden.

Der Partikelabscheider umfasst ferner einen zwischen dem Gasstromeingang und dem Gasstromausgang angeordneten Ablenkleitungskanal, der die Großvolumenströmung und/oder die Leckageströmung um wenigstens 90° in Bezug auf die Einströmrichtung ablenkt. Insbesondere ist der Ablenkleitungskanal kragenförmig ausgebildet. Insbesondere ist der Ablenkleitungskanal zwischen dem Ventilsitz und dem Ventilglied ausgebildet. Insbesondere wird der Ablenkleitungskanal in Einströmrichtung durch das Ventilglied und in der dem Einströmrichtung entgegengesetzten Richtung durch den Ventilsitz begrenzt. Insbesondere weist das Ventilglied einen Napf und einen an den Napf anschließenden Ventilgliedkragen auf. Insbesondere erstreckt sich das Ventilglied ausgehend von einem Napfgrund in Einströmrichtung entlang eines Napfmantels, der sich insbesondere in Radialrichtung weitet, und geht, in Einströmrichtung gesehen, am Ende des Napfmantels in den Ventilgliedkragen über, der sich bogenförmig zunächst in Radialrichtung nach außen erstreckt und anschließend in die zur Einströmrichtung entgegengesetzte Richtung erstreckt. Insbesondere begrenzen der Napf und der Ventilgliedkragen einen Ringraum.

Der Ventilsitz ist insbesondere komplementär zum Ventilglied ausgebildet. Insbesondere weist der Ventilsitz einen sich in Einströmrichtung weitenden Hohlkörper auf, der in einen Ventilsitzkragen übergeht, der sich bogenförmig zunächst in Radialrichtung und anschließend in zur Einströmrichtung entgegengesetzte Richtung erstreckt. Insbesondere ist am der Einströmrichtung entgegengesetzten Ende des Hohlkörpers der Gasstromeingang als insbesondere kreisförmige Eintrittsöffnung ausgebildet. Insbesondere ist das Ventilglied teleskopartig in den Hohlkörper verschiebbar. Insbesondere ist das Ventilglied in Stellrichtung und in Schließrichtung verstellbar. Insbesondere entspricht die Stellrichtung der Einströmrichtung. Insbesondere entspricht die Schließrichtung der der Einströmrichtung entgegengesetzten Richtung.

In einer Ausführungsform steht das Ventilglied im Schließzustand über den Ventilgliedkragen in Anschlagkontakt mit dem Ventilsitz. Durch Verlagerung des Ventilglieds vom Schließzustand in den wenigstens einen Öffnungszustand kann die Großvolumenströmung freigegeben werden, die dann über den Ventilsitzkragen um wenigstens 90° in Bezug auf die Einströmrichtung abgelenkt wird. Alternativ oder zusätzlich kann die Anschlagkontaktfläche des Ventilsitzkragens und/oder des mit dem Ventilsitzkragen in Anschlagkontakt stehenden Bereich des Ventilsitzes konturiert ausgebildet sein, um im Schließzustand eine Leckage-Strömung zuzulassen, die um wenigstens 90° in Bezug auf die Einströmrichtung abgelenkt wird. Hierzu kann beispielsweise die Konturierung am Ende des Ventilgliedkragens in Schließrichtung ausgebildet sein.

Gemäß diesem Aspekt der Erfindung weist der Partikelabscheider ein Textil, insbesondere Vlies, auf, das derart angeordnet ist, dass wenigstens ein Teil der abgelenkten Großvolumenströmung und/oder der abgelenkten Leckage-Strömung auf das Textil trifft.

Vorzugsweise ist das Textil aus einem flächigen textilen Gebilde, wie einem Vlies, einem Gewebe, einem Gewirke, einem Gestricke, einem Geflecht und/oder Filz, gebildet. Besonders bevorzugst ist das Textil zumindest teilweise aus einem Vlies gebildet. Ein Vlies ist im Allgemeinen ein Gebilde aus Fasern begrenzter Länge, Endlosfasern (Filamenten) oder geschnittenen Garnen, die auf beliebige Weise zusammengefügt und/oder miteinander verbunden worden sind, insbesondere zu einer Faserschicht oder einem Faserflor.

Vorteilhaft bezüglich der Abscheiderate von Partikeln des Gasstroms haben sich Vliese bzw. Vliesstoffe mit einem Flächengewicht im Bereich von 100 g/m² - 400 g/m², insbesondere im Bereich von 150 g/m² - 350 g/m², insbesondere im Bereich von 200 g/m² - 300 g/m², insbesondere im Bereich von 220 g/m² - 280 g/m², vorzugsweise im Bereich von 230 g/m² - 270 g/m², liegen. Eine Permeabilität gegenüber Luft, insbesondere eine sogenannte Luftdurchlässigkeit, der eingesetzten Vliese bzw. Vliesstoffe liegt insbesondere im Bereich von 975 l/(m²/s) - 2800 l/(m²/s), vorzugsweise im Bereich von 1100 l/(m²/s) - 2500 l/(m²/s), vorzugsweise im Bereich von 1200 l/(m²/s) - 2000 l/(m²/s), vorzugsweise im Bereich von 1300 l/(m²/s) - 1800 l/(m²/s), insbesondere bei etwa 1800 l/(m²/s). Insbesondere lässt sich die Luftdurchlässigkeit gemäß DIN EN ISO 9237 berechnen. Des Weiteren kann eine Faserstärke der die Vliese bildenden Fasern im Bereich von 0,02 mm - 0,03 mm liegen, insbesondere etwa 0,025 mm betragen.

Als weiteres Beispiel können auch Vliese bzw. Vliesstoffe mit einem Flächengewicht im Bereich von 300 g/m² - 650 g/m², insbesondere im Bereich von 350 g/m² - 600 g/m², insbesondere im Bereich von 400 g/m² - 550 g/m², insbesondere im Bereich von 425 g/m² - 525 g/m², insbesondere im Bereich von 450 g/m² - 500 g/m², insbesondere im Bereich von 470 g/m² - 480 g/m², vorzugsweise etwa 475 g/m², eingesetzt. Die Fasergeometrie kann beispielsweise 5D × 51 mm betragen. Die Festigkeit in Längserstreckungsrichtung und/oder Quererstreckungsrichtung kann insbesondere größer als 800 N/5 cm, insbesondere im Bereich von 800 N/5cm - 1.600 N/5cm, insbesondere im Bereich von 900 N/5cm - 1.400 N/5cm, insbesondere im Bereich von 1.000 N/5cm - 1.300 N/5cm, insbesondere im Bereich von 1.050 N/5cm - 1.250 N/5cm, insbesondere im Bereich von 1.100 N/5cm - 1.200 N/5cm, vorzugsweise etwa 1150 N/5cm liegen. Die Zugdehnung in Längserstreckungsrichtung und/oder Quererstreckungsrichtung kann im Bereich 40 %- 140 %, insbesondere im Bereich 50 % - 120 %, insbesondere im Bereich 60 % - 100 %, insbesondere im Bereich 70 % - 90 %, vorzugsweise bei etwa 80 % liegen. Die Reißfestigkeit in Längserstreckungsrichtung kann vorzugsweise größer als 300 N sein, insbesondere im Bereich 300 N - 500 N, insbesondere im Bereich 320 N - 400 N, insbesondere im Bereich 340 N - 370 %, vorzugsweise bei etwa 350 N liegen. Die Reißfestigkeit in Quererstreckungsrichtung kann vorzugsweise größer als 300 N sein, insbesondere im Bereich 300 N - 600 N, insbesondere im Bereich 350 N - 500 N, insbesondere im Bereich 400 N - 450 %, vorzugsweise bei etwa 420 N liegen.

Gemäß verteilhaften Ausbildungen der Vliese kann eine quer zur flächigen Erstreckung von Vliese betrachtete Dicke, insbesondere eine Schichtstärke, im Bereich von 1,5 mm - 5 mm, vorzugsweise im Bereich von 1,7 mm - 4 mm, vorzugsweise im Bereich von 1,9 mm - 3 mm, insbesondere bei etwa 2 mm, liegen.

Gemäß einer vorteilhaften Ausgestaltung umfasst das Textil, insbesondere das Vlies ein Polyestermaterial, insbesondere thermoplastischen Kunststoff, wie PET oder PTFE.

Insbesondere ist das Textil am Anströmgehäuseteil des Partikelabscheiders angeordnet. Insbesondere ist das Textil innerhalb des Gehäuses des Partikelabscheiders angeordnet. Insbesondere ist das Textil innerhalb des Gehäuses des Partikelabscheiders am Anströmgehäuseteil angeordnet. Insbesondere ist das Textil derart am Anströmgehäuseteil angeordnet, dass die anströmbare Fläche des Textils zum Gehäusedeckelteil ausgerichtet ist. Insbesondere ist das Textil stromabwärts des Ablenkleitungskanals angeordnet. Insbesondere ist das Textil derart angeordnet, dass die Großvolumenströmung und/oder die Leckage-Strömung nach ihrer Umlenkung um wenigstens 90° durch den Ablenkleitungskanal auf das Textil zuströmt. Insbesondere ist das Textil derart angeordnet, dass der Ablenkleitungskanal die Großvolumenströmung und/oder die Leckage-Strömung gegenüber der Einströmrichtung in Richtung des Textils ablenkt. Insbesondere wird die Leckage-Strömung durch den Ablenkleitungskanal derart abgelenkt, dass sie im Wesentlichen in der zur Einströmrichtung entgegengesetzten Richtung auf das Textil trifft.

Insbesondere ist das Textil ringförmig ausgestaltet. Insbesondere ist das Textil in eine ringförmige Aufnahme des Anströmgehäuseteils eingelegt. Insbesondere erstreckt sich das Textil in Umfangsrichtung um den Ventilsitz und/oder das Ventilglied herum. Insbesondere sind das Ventilglied und der Ventilsitz in Radialrichtung innerhalb des Textils angeordnet. Insbesondere ist das Textil stromabwärts des Ventilsitzes und/oder des Ventilglieds und stromaufwärts des Gasstromausgangs angeordnet.

Unter dem zuvor beschriebenen wenigstens einen Öffnungszustand kann insbesondere ein teilweise geöffneter Zustand zu verstehen sein, in dem das Ventilglied frei von einem axialen und/oder radialen Anschlagkontakt mit dem Ventilsitz, dem Anströmgehäuseteil und/oder dem Deckelgehäuseteil ist. In diesem Zustand kann beispielsweise eine Großvolumenströmung über den Ablenkleitungskanal auf das Textil umgelenkt werden und gleichzeitig eine Leckage-Strömung, beispielsweise über Durchtrittsöffnungen im Ventilglied zugelassen werden, die gar nicht oder zumindest weniger stark abgelenkt werden als die Großvolumenströmung. Hierzu können beispielsweise Öffnungen, insbesondere Bohrungen, im Ventilglied und/oder Ventilsitz ausgebildet sein. In einer Ausführungsform sind hierzu Durchtrittsöffnungen, insbesondere vier in Umfangsrichtung verteilte Durchtrittsöffnungen, im Ventilgliedkragen, insbesondere am Übergang zwischen Napf und Ventilgliedkragen, angebracht.

In einer Ausführungsform kann ein zweites Textil, insbesondere Vlies, am Gehäusedeckelteil des Partikelabscheiders angebracht sein. Insbesondere ist das zweite Textil ein Vlies. Insbesondere ist das zweite Textil ringförmig ausgebildet. Insbesondere wird das zweite Textil über die zuvor beschriebenen Durchtrittsöffnungen sowohl im Schließzustand als auch im Öffnungszustand insbesondere direkt von einer Leckageströmung, insbesondere einer Teil-Leckageströmung angeströmt.

Neben dem zuvor beschriebenen wenigstens einem Öffnungszustand, der auch als teilweise geöffneter Zustand bezeichnet werden kann, kann der Partikelabscheider auch einen vollständig geöffneten Zustand aufweisen. In diesem Zustand weist das Ventilglied insbesondere einen Anschlagkontakt mit dem Gehäusedeckelteil auf. Im vollständig geöffneten Zustand ist insbesondere der Ablenkleitungskanal breiter als bei dem teilweise geöffneten Zustand, sodass ein größerer Großvolumenstrom, insbesondere von bis zu 120 l/min, zugelassen ist. Beim vollständig geöffneten Zustand kann die Leckage-Strömung, die beispielsweise im teilweise geöffneten Zustand durch Durchtrittsöffnungen im Ventilgliedkragen zugelassen wird, dadurch unterbunden sein, dass die Durchtrittsöffnungen im Anschlagkontakt dichtend verschlossen werden. In einer Ausführungsform kann der Anschlagkontakt in der vollständig geöffneten Position durch einen Kontakt des Ventilgliedkragens mit dem zweiten Textil realisiert sein. Hierzu kann der Ventilsitzkragen an seinem Ende in Einströmrichtung einen ringförmigen Anschlag aufweisen, der im vollständig geschlossenem Zustand in Anschlagkontakt mit dem zweiten Textil steht. Der ringförmige Anschlag kann von den zuvor beschriebenen wenigstens einen Durchtrittsöffnungen durchsetzt sein.

Gemäß einer Ausführungsform lenkt der Ablenkleitungskanal die Großvolumenströmung und/oder die Leckage-Strömung um wenigstens 100°, 110°, 120°, 130° oder wenigstens 140°, insbesondere um im Wesentlichen 180°, in Bezug auf die Einströmrichtung ab. Unter einer Ablenkung von im Wesentlichen 180° ist insbesondere eine Ablenkung zwischen 150° und 210°, 155° und 205°, 160° und 200°, 165° und 195°, 170° und 190° oder 175° und 185° zu verstehen. Eine Ablenkung von im Wesentlichen 180° kann insbesondere durch den Einsatz eines Ventilglieds mit Napf und Ventilgliedkragen realisiert werden. Besonders bevorzugt ist der Ablenkleitungskanal hierfür kragenförmig ausgebildet. Insbesondere wird der kragenförmige Ablenkleitungskanal in Stellrichtung durch den Ventilgliedkragen und in Schließrichtung durch den Ventilsitzkragen begrenzt.

In einer Ausführungsform ist der Partikelabscheider bei einem Volumen von 30 l/min des zu reinigenden Gasstrom im Schließzustand. Dies kann insbesondere durch den Einsatz eines im Schließzustand vorgespannten Ventilglieds realisiert werden. Hierzu kann insbesondere eine Feder, insbesondere eine Spiralfeder, zwischen dem Ventilglied und dem Deckelgehäuseteil des Partikelabscheiders vorgesehen sein. Insbesondere ist das Ventilglied im Schließzustand derart vorgespannt, dass ein Volumenstrom von bis zu 30 l/min als Leckage-Strömung, beispielsweise über die zuvor beschriebene Konturierung und/oder wenigstens eine Durchtrittsöffnungen, den Partikelabscheider durchströmen kann, ohne das Ventilglied in wenigstens einen der Öffnungszustände zu versetzen. Insbesondere sind die zuvor genannten Konturierungen und/oder Durchtrittsöffnungen derart an die Vorspannung des Ventilglieds angepasst, dass sich der Strömungswiderstand bei einem Volumenstrom von mehr als 30 l/min derart erhöht, dass der Volumenstrom das Ventilglied gegen die Vorspannkraft in den wenigstens einen Öffnungszustand versetzt.

Insbesondere bei einem Volumenstrom von mehr als 30 l/min und insbesondere maximal 70 l/min befindet sich das Ventilglied in einem teilweise geöffneten Zustand, in dem der Großvolumenstrom über den Ablenkleitungskanal auf das Textil, insbesondere das an dem Anströmgehäuseteil angeordnete Textil, umgelenkt wird. Gleichzeitig kann in diesem teilweise geöffneten Zustand noch ein Leckage-Strom, beispielsweise über die zuvor beschriebene Durchtrittsöffnungen, auf ein zweites Textil, insbesondere ein an dem Deckelgehäuseteil angeordnetes Textil, gelenkt werden.

Insbesondere bei Volumenströmen von mehr als 70 l/min und insbesondere bis zu 120 l/min wird das Ventilglied derart stark in Stellrichtung verlagert, dass es in einen insbesondere axialen Anschlagkontakt mit dem Gehäusedeckelteil oder dem zweiten Vlies gerät. Dadurch kann insbesondere die Leckage-Strömung unterbunden werden, sodass die gesamte Strömung als Großvolumenstrom über den Ablenkleitungskanal auf das erste Textil gelenkt wird.

Die Erfinder der vorliegenden Erfindung haben festgestellt, dass die Anströmung eines Textils mit einem umgelenkten Gasstrom eine überraschende Erhöhung des Abscheidegrads gegenüber der Anströmung eines Textils mit einem nicht umgelenkten Gasstrom bewirkt. Daher hat es sich als besonders bevorzugt herausgestellt, sowohl die Leckage-Strömung im Schließzustand als auch die Großvolumenströmung in dem wenigstens einen Öffnungszustand zunächst um wenigstens 90° umzulenken, bevor das Textil angeströmt wird. Als besonders vorteilhaft hat sich die zuvor beschriebene Umlenkung um im Wesentlichen 180° erwiesen.

Ein weiterer Aspekt der vorliegenden Erfindung, der mit dem zuvor beschriebenen Aspekt und dessen Ausführungsformen kombinierbar ist, betrifft ebenfalls einen Partikelabscheider zum Reinigen eines mit Partikeln, wie Fluidpartikeln, beladenen Gasstroms. Der Partikelabscheider weist einen Gasstromeingang auf, an dem der Gasstrom in den Partikelabscheider gelangt, einen Gasstromausgang, an dem der Gasstrom den Partikelabscheider verlässt sowie einen zwischen dem Gasstromeingang und dem Gasstromausgang angeordneten Leitungskanal. Gemäß diesem Aspekt der Erfindung ist in dem Leitungskanal ein Textil angeordnet, das mit einer das Anhaften von Partikeln an dem Textil reduzierenden Beschichtung versehen ist. Insbesondere ist die Beschichtung hydrophob und/oder ölabweisend.

Das Textil kann angeordnet sein wie das Textil gemäß dem zuvor beschriebenen Aspekt der Erfindung. Ferner kann das Textil in Material und Form wie zuvor beschrieben ausgebildet sein. Der Leitungskanal umfasst insbesondere den gesamten von dem Gasstrom durchströmten Raum zwischen dem Gasstromeingang und dem Gasstromausgang. Insbesondere umfasst der Leitungskanal den vollständigen Abscheideraum, der zwischen einem Anströmgehäuseteil und einem Deckelgehäuseteil des Partikelabscheiders begrenzt ist. Insbesondere ist das Textil derart in dem Leitungskanal angeordnet, dass es von dem Gasstrom angeströmt wird. Dieser Erfindungsaspekt umfasst insbesondere Partikelabscheider mit und ohne bewegliche Ventilglieder. Bei einem Ausführungsbeispiel mit beweglichem Ventilglied und Ventilsitz ist das Textil vorzugsweise in einem Abschnitt des Leitungskanals stromabwärts des Ventilgliedes und des Ventilsitzes angeordnet. Bei Ausführungsformen, bei denen der Leitungskanal einen Ablenkleitungskanal aufweist, ist das beschichtete Textil vorzugsweise stromabwärts des Ablenkleitungskanals angeordnet. Besonders bevorzugt ist das beschichtete Textil gemäß dem zuvor beschriebenen Aspekt der Erfindung derart angeordnet, dass es von einer abgelenkten Großvolumenströmung und/oder Leckageströmung angeströmt wird. Besonderes bevorzugt ist ein beschichtetes Textil gemäß diesem Aspekt der Erfindung an dem Anströmgehäuseteil des Partikelabscheiders und/oder ein beschichtetes Textil gemäß diesem Aspekt der Erfindung an einem Deckelgehäuseteil des Partikelabscheiders angeordnet.

Die Erfinder der vorliegenden Erfindung haben festgestellt, dass durch das Aufbringen der das Anhaften von Partikeln reduzierenden Beschichtung, das Zusetzen des Textils verlangsamt, insbesondere vermieden, werden kann. Dieses Zusetzen wird auch als Versotten bezeichnet. Durch das Vermeiden der Zusetzung kann sowohl die Lebenszeit als auch die Abscheiderate des Partikelabscheiders verbessert werden. Insbesondere beim Einsetzen des Partikelabscheiders als Ölabscheider hat sich herausgestellt, dass grobe Partikel, wie Ruß, zu einer schnellen Zusetzung des Textils führen und somit die Abscheiderate reduzieren. Dies konnte überraschend mit der erfindungsgemäßen Maßnahme verhindert werden. Die Erfinder haben ferner festgestellt, dass das Problem der Zusetzung besonders bei Partikelabscheidern mit beweglichen Ventilgliedern und besonders stark bei federvorgespannten Ventilgliedern auftritt. Überraschenderweise könnte besonders bei diesen Ausführungsformen das Problem der Zusetzung/Versottung durch die erfindungsgemäße Beschichtung des Textils gelöst werden. Daher betrifft dieser Aspekt der Erfindung insbesondere einen federbelasteten Partikelabscheider, insbesondere Ölabscheider, mit Ventilglied und der erfindungsgemäß beschichteten Textillage. Insbesondere hat sich herausgestellt, dass mit der erfindungsgemäßen Maßnahme, die Zusetzung/Versottung dadurch verhindert wird, dass grobe Partikel auf Grund der glatten Oberfläche und der mangelnden Kohäsion bei größeren Volumenströmen von alleine abgetragen werden. Somit stellt dieser Aspekt der Erfindung eine Selbstreinigungsfunktion der Textilien bereit. Ferner wirkt die Beschichtung des Textils insbesondere Ölabweisend.

In einer Ausführungsform wird die Beschichtung durch Besprühen oder Beschichten, vorzugsweise Bedrucken, durch Tränken des Textils, Bedampfen oder Lackieren aufgebracht. Alternativ oder zusätzlich ist die Beschichtung eine Silan-basierte Lösung, beispielsweise ein flüssiger oder pulverförmiger Beschichtungsstoff, insbesondere ein Lack, wie ein Siliziumlack. In einer Ausführungsform wird die Beschichtung, insbesondere die Siliziumlack-Beschichtung, während dem Blasen der Vliesfasern aufgebracht, sodass insbesondere jeder Faser des Vlieses mit der Beschichtung versehen ist.

In einer Ausführungsform von diesem oder dem zuvor beschriebenen Aspekt der Erfindung weist das Textil ein Polyestermaterial, insbesondere einen thermoplastischen Kunststoff, wie PET oder PTFE auf. Besonders bevorzugt handelt es sich bei dem Textil um ein PFTE-Vlies.

Vorteilhafterweise wird das beschichtete Vlies sowohl bei dem zuvor beschriebenen Aspekt der vorliegenden Erfindung als auch bei dem nachfolgenden beschriebenen Aspekt der vorliegenden Erfindung verwendet. Besonders bevorzugt werden zwei erfindungsgemäß beschichtete Vliese verwendet, von denen eines an einem Anströmgehäuseteil und ein anderes an einem Deckelgehäuseteil des Partikelabscheiders angeordnet wird. Vorzugsweise wird das Vlies an dem Deckelgehäuseteil und/oder an dem Anströmgehäuseteil im Schließzustand über eine Leckageströmung angeströmt.

Ein weiterer Aspekt der vorliegenden Erfindung, der mit den zuvor beschriebenen Aspekten und deren Ausführungsformen kombinierbar ist, betrifft ebenfalls einen Partikelabscheider zum Reinigen eines mit Partikeln, wie Fluidpartikeln, beladenen Gasstroms. Der Partikelabscheider umfasst einen Gasstrom-Eingang, an dem der Gasstrom mit einer Einströmrichtung in den Partikelabscheider gelangt. Ferner umfasst der Partikelabscheider einen Gasstromausgang, an dem der Gasstrom den Partikelabscheider verlässt. Des Weiteren umfasst der Partikelabscheider einen Gasstromteiler, der dazu ausgebildet ist, den Gasstrom in wenigstens zwei Teilgasströme, insbesondere in eine Leckageströmung und eine Großvolumenströmung, zu unterteilen sowie eine stromabwärts des Gasstromteiles angeordnete Ablenkleitungsstruktur, die einen Teilgasstrom stärker ablenkt als wenigstens einen weiteren Teilgasstrom. Ferner umfasst der Partikelabscheider ein Textil, insbesondere Vlies, das derart angeordnet ist, dass wenigstens ein Teil des stärker abgelenkten Gasstroms auf das Textil trifft und ein weiteres Textil, insbesondere Vlies, das derart angeordnet ist, dass wenigstens ein Teil des weniger stark abgelenkten Gasstroms auf das weitere Textil trifft. Vorzugweise sind der Gasstromeingang, der Gasstromausgang und/oder das Textil in ihrer Dimensionierung, Materialauswahl und Positionierung wie zuvor beschrieben ausgestaltet.

Der Partikelabscheider gemäß diesem Aspekt der Erfindung kann ein statischer Partikelabscheider oder ein Partikelabscheider mit einem Schließzustand und wenigstens einem Öffnungszustand wie zuvor beschrieben sein. Insbesondere kann der Gasstromteiler dazu ausgebildet sein, den Gasstrom in einem Schließzustand in zwei Teil-Leckageströme zu unterteilen. Dabei kann die Ablenkleitungsstruktur dazu ausgebildet sein, die zwei Teil-Leckageströme im Schließzustand unterschiedlich stark abzulenken. Alternativ oder zusätzlich kann der Gasstromteilleiter dazu ausgebildet sein, den Gasstrom in einem Öffnungszustand, insbesondere in einem teilweise geöffneten Zustand, in wenigstens einen Leckagestrom und einen Großvolumenstrom zu teilen. Weiterhin kann der Gasstromteiler derart ausgebildet sein, dass er lediglich in bestimmten Zuständen, insbesondere im geschlossenen und/oder teilweise geöffnetem Zustand, den Gasstrom in wenigstens zwei Teilströme unterteilt. So kann der Gasstromteiler beispielsweise dazu ausgebildet sein, in einem vollständig geöffneten Zustand keine Unterteilung des Gasstroms vorzunehmen.

Die Ablenkleitungsstruktur kann dazu ausgebildet sein, einen Teilgasstrom abzulenken und den anderen Teilgasstrom weniger oder gar nicht abzulenken. Insbesondere kann die Ablenkleitungsstruktur dazu ausgebildet sein einen Teilstrom im Wesentlichen ablenkungsfrei passieren zu lassen und den anderen wenigstens ein Teilstrom abzulenken. Unter im Wesentlichen ablenkungsfrei ist insbesondere eine Ablenkung von weniger als 45°, 30°, 15°, 10° oder 5° relativ zur Einströmrichtung zu verstehen.

In einer Ausführungsform können der Gasstromteiler sowie die Ablenkeinrichtung durch ein Ventilglied und einen Ventilsitz des Partikelabscheiders gebildet werden. Insbesondere können der Gasstromteiler und die Ablenkleitungsstruktur durch die zuvor und nachfolgend beschriebene bevorzugte Ausführungsform des Ventilglieds und des Ventilsitzes realisiert werden. Insbesondere kann der Gasstromteiler durch wenigstens eine in das Ventilglied eingebrachte Durchtrittsöffnung realisiert sein. Insbesondere kann die den Gasstromteiler realisierende wenigstens eine Durchtrittsöffnung am Übergang zwischen dem Napf und den Ventilgliedkragen des Ventilglieds ausgebildet sein. Dadurch kann ein Teil des Gasstroms, der über dem Napf im Wesentlichen nicht umgelenkt wurde, über die wenigstens eine Durchtrittsöffnung von dem restlichen Gasstrom geteilt werden, der anschließend über den Ventilgliedkragen umgelenkt wird.

Insbesondere kann die Ablenkleitungsstruktur durch den Ventilgliedkragen gebildet werden, der den verbleibenden Gasstrom gegenüber der Einströmrichtung ablenkt. Am stromabwärtigen Ende des Ventilkragens kann wie zuvor beschrieben eine Konturierung vorgesehen sein, sodass der stärker abgelenkte Teilgasstrom auch im Schließzustand des Partikelabscheiders als Teil-Leckagestrom aus dem Partikelabscheider austreten kann.

Bei einer weniger bevorzugten Ausführungsform kann das stromabwärtige Ende des Ventilgliedkragens im Schließzustand in einem abdichtenden Kontakt mit dem Ventilsitz stehen, sodass in diesem Zustand keine Aufteilung des Gasstroms erfolgt. Bei dieser Ausführungsform erfolgt die Aufteilung dann erst, wenn das Ventilglied von einer Schließstellung in eine Öffnungsstellung verlagert wird.

Vorzugsweise sind die zwei Textile gemäß diesem Aspekt der Erfindung derart angeordnet, dass sie von den zwei Teilgasströmen im Wesentlichen direkt angeströmt werden. Unter einer im Wesentlichen direkten Anströmung ist in diesem Zusammenhang insbesondere zu verstehen, dass die Teilgasströme unmittelbar nach dem Verlassen des Gasstromteilers und/oder der Ablenkleitungsstruktur auf das jeweilige Textil zuströmen.

In einer Ausführungsform lenkt die Ablenkleitungsstruktur den stärker abgelenkten Gasstrom um wenigstens 90°, insbesondere um wenigstens 100°, 110°, 120°, 130° oder wenigstens 140°, insbesondere um im Wesentlichen 180° in Bezug auf die Einströmrichtung ab. Alternativ oder zusätzlich wird der weniger stark abgelenkte Teilgasstrom um weniger als 60°, 45°, 30°, 15° oder 5° abgelenkt. Insbesondere durchströmt der weniger stark abgelenkte Teilgasstrom insbesondere im geschlossenen oder teilweise geöffneten Zustand einen Strömungskanal zwischen Ventilglied und Ventilsitz und verlässt diesen durch wenigstens eine Durchtrittsöffnungen im Ventilglied, über die der weniger stark abgelenkte Teilgasstrom direkt auf das weitere Textil trifft. Alternativ oder zusätzlich sind der Gasstromteiler und die Ablenkleitungsstruktur derart ausgebildet, dass der stärker abgelenkte Gasstrom einen insbesondere kragenförmigen Spalt zwischen Ventilsitz und Ventilglied durchströmt und am stromabwärtigen Ende des Ventilsitzes und/oder Ventilgliedes auf das dem stärker abgelenkten Gasstrom zugeordneten Textil strömt. Vorzugsweise sind der Gasstromteiler und die Ablenkleitungsstruktur derart ausgestaltet, dass der weniger stark abgelenkte Teilgasstrom zumindest im Schließzustand und/oder im teilweise geöffneten Zustand durch die Durchtrittsöffnungen auf das weitere Textil strömt und/oder der stärker abgelenkte Teilgasstrom zumindest im Schließzustand, im teilweise geöffneten Zustand und/oder in vollständig geöffnetem Zustand über das stromabwärtige Ende des Ventilgliedes und/oder Ventilsitzes auf das dem stärker abgelenkten Teilgasstrom zugeordneten Textil strömt.

Gemäß bevorzugten Ausführungsformen der zuvor beschriebenen Aspekte der Erfindung ist der Ablenkleitungskanal, der Leitungskanal, der Gasstromteiler und/oder die Ablenkleitungsstruktur wenigstens abschnittsweise durch ein bewegbares Ventilglied zum Einstellen des den Partikelabscheider durchströmenden Volumenstromes gebildet. Insbesondere ist dabei das Ventilglied in den Schließzustand vorgespannt, insbesondere federvorgespannt.

Wie zuvor beschrieben umfasst der Partikelabscheider vorzugsweise einen den Gasstromeingang begrenzenden Ventilsitz und ein Ventilglied. Das Ventilglied ist insbesondere zwischen einer Schließstellung, in der das Ventilglied in einen Anschlagkontakt mit dem Ventilsitz gebracht ist, und wenigstens einer Öffnungsstellung verlagerbar, in der das Ventilglied aus dem Anschlagkontakt in einer axialen Stellrichtung bewegt ist. Der Anschlagkontakt weist insbesondere einen axialen Anschlagkontakt und einen radialen Anschlagkontakt auf.

Der radiale Anschlagkontakt wird insbesondere durch eine radiale Anschlagkontaktfläche des Ventilgliedes, insbesondere des Napfes, und eine radiale Anschlagkontaktfläche des Ventilsitzes, insbesondere des Hohlkörpers, gebildet. Hierfür weist der Ventilsitz, insbesondere Hohlkörper, an seiner Innenseite wenigstens einen Radialvorsprung auf. Insbesondere wird die radiale Anschlagkontaktfläche des Hohlkörpers durch die dem Napf Schließzustand zugewandte Fläche gebildet. Die radiale Anschlagkontaktfläche des Hohlkörpers ist insbesondere komplementär zu der radialen Anschlagkontaktfläche des Napfes ausgebildet, um im Schließzustand einen flächigen radialen Anschlagkontakt zu bilden. Insbesondere kann der Hohlkörper zur Ausbildung des radialen Anschlagkontakts mehrere in Umfangrichtung zueinander versetzte Radialvorsprünge aufweisen. Um im Schließzustand die zuvor beschriebene Leckageströmung zuzulassen, ist der wenigstens eine Radialvorsprung insbesondere nicht als in Umfangsrichtung durchgehender Vorsprung ausgebildet, sodass auch im Schließzustand wenigstens ein Leckageströmungskanal zwischen dem Napf und dem Hohlkörper gebildet wird.

Der axiale Anschlagkontakt wird insbesondere durch eine axiale Anschlagkontaktfläche des Ventilgliedes, insbesondere Umlenkschirms, und eine axiale Anschlagkontaktfläche des Anströmgehäuseteils, insbesondere Ventilsitzes, gebildet. Hierfür ist vorzugsweise am Anströmgehäuseteils ein Anschlagflansch ausgebildet. Die dem Umlenkschirm in Stellrichtung zugewandte Fläche des Anschlagflansches bildet vorzugsweise die axiale Anschlagkontaktfläche des Anströmgehäuseteils. Der Anschlagflansch schließt vorzugsweise stromabwärts an den Ventilsitzkragen an und erstreckt sich von diesem in Schließrichtung, wo er in einen Radialsteg des Anströmgehäuseteils übergeht. Die axiale Anschlagkontaktfläche des Umlenkschirms, wird vorzugsweise durch deren dem Anschlagflansch in Schließrichtung zugewandte Seite gebildet. Dabei weist der Umlenkschirm eine Konturierung mit Vorsprüngen - zur Bildung der Anschlagkontaktfläche - und Vertiefungen- zur Gewährleistung der Leckageströmung im Schließzustand - auf.

Insbesondere weist das Ventilglied einen dem zu reinigenden Gasstrom zugewandten rotationsförmigen Napf auf. Vorzugsweise weist das Ventilglied ferner einen an den Napf anschließenden rotationsförmigen Umlenkschirm auf, der den Gegenstrom in der wenigstens einen Öffnungsstellung in Richtung des Textils, insbesondere des dem stärker umgelenkten Teilgasstrom zugeordneten Textils, umlenkt. Insbesondere ist der Umlenkschirm derart gestaltet, dass er den Gasstrom um wenigstens 90°, insbesondere um wenigstens 100°, 110°, 120°, 130° oder 140°, insbesondere um im Wesentlichen 180°, in Bezug auf die Einströmrichtung ablenkt. Insbesondere kann der Umlenkschirm als Ventilkragen bezeichnet werden und kann mit einem oder mehreren der zuvor beschriebenen Merkmale des Ventilkragens ausgebildet sein.

In einer Ausführungsform erstreckt sich der Umlenkschirm entgegen der axialen Stellrichtung axial um weniger als 60%, insbesondere weniger als 55% oder weniger als 50% der axialen Abmessung des Napfes.

Gemäß einer Ausführungsform umfasst der Partikelabscheider ein den Ventilsitz aufweisendes Anströmgehäuseteil mit einer Textilaufnahme, insbesondere Vertiefung, für das Textil. Insbesondere ist die Textilaufnahme als ringförmige Aussparung in das Anströmgehäuseteil ausgebildet. Insbesondere erstrecken sich der zuvor beschriebene Ventilsitz, das zuvor beschriebene Ventilglied und /oder der zuvor beschriebene Anschlagflansch in Radialrichtung innerhalb der Textilaufnahme, beziehungsweise werden von dieser umlaufen. Insbesondere umläuft die Textilaufnahme den Ventilsitz, das Ventilglied und/oder den Anschlagflansch in Umfangsrichtung. Insbesondere ist in dem Ventilsitz ein ringförmiges Textil, insbesondere ein Ringvlies, eingelegt.

In einer Ausführungsform weist der Partikelabscheider ferner ein dem Anströmgehäuseteil gegenüberliegendes Deckelgehäuseteil mit einer Textilaufnahme, insbesondere Vertiefung, für ein weiteres Textil, insbesondere für das zuvor beschriebene weitere Textil, auf. Die weitere Textilaufnahme ist insbesondere als ringförmige Vertiefung in dem Deckelgehäuseteil ausgebildet. Insbesondere umläuft die weitere Textilaufnahme in Umfangsrichtung einen Führungszapfen des Ventilgliedes. Insbesondere ist die weitere Textilaufnahme und das darin angeordnete weitere Textil gegenüberliegend zu der wenigstens einen in dem Ventilglied eingebrachten Durchtrittsöffnung angeordnet, insbesondere um eine aus dieser wenigstens einen Durchtrittsöffnung austretende Leckageströmung, Teil-Leckageströmung und/oder weniger stark abgelenkten Teilstrom direkt auf das weitere Textil zu lenken.

Gemäß einer bevorzugten Ausführungsform des als erstes beschriebenen Aspektes der Erfindung ist die Textilaufnahme des Anströmgehäuseteils so dimensioniert und/oder angeordnet, dass sowohl die Leckageströmung im Schließzustand als auch die Großvolumenströmung in dem wenigstens einen Öffnungszustand in Richtung der Textilaufnahme strömt. Gemäß einer Ausführungsform des als zweites beschriebenen Aspektes der vorliegenden Erfindung ist die Textilaufnahme des Anströmgehäuseteils so dimensioniert und/oder angeordnet, dass der Gasstrom in Richtung der Textilaufnahme strömt. Gemäß einer Ausführungsform des als drittes beschriebenen Aspekts der vorliegenden Erfindung ist die Textilaufnahme des Anströmgehäuseteils so dimensioniert und/oder angeordnet, dass einer der zwei Teilströme in Richtung der Textilaufnahme strömt.

Gemäß einer Ausführungsform ist das Ventilglied derart bewegbar und/oder dimensioniert, dass es frei von einem Anschlagkontakt mit dem Textil ist. Darunter ist insbesondere das dem Anströmgehäuseteil zugeordnete Textil zu verstehen. Insbesondere ist das Ventilglied im Schließzustand frei von einem Anschlagkontakt mit dem Textil. Ausführungsformen, bei denen das Ventilglied im vollständig geöffneten Zustand im Anschlagkontakt mit dem weiteren Textil stehen, sollen von dieser Ausführungsform insbesondere abgedeckt sein.

Hierzu kann das Anströmgehäuseteil insbesondere benachbart der Textilaufnahme einen Anschlagflansch aufweisen, mit dem das Ventilglied insbesondere im Schließzustand in einen Anschlagkontakt geraten kann. Wie zuvor und nachfolgend beschrieben, kann das Ventilglied an seiner Kontaktstelle mit dem Anschlagflansch eine Konturierung aufweisen, um im Schließzustand eine Leckageströmung entlang des Anschlagkontaktes zuzulassen. Alternativ oder zusätzlich kann die Konturierung an dem Anschlagflansch ausgebildet sein. Die Erfinder der vorliegenden Erfindung haben herausgefunden, dass durch Vermeidung eines Anschlagkontaktes zwischen Ventilglied und Textil insbesondere im Schließzustand das Anhaften, insbesondere bei kalten Temperaturen das Einfrieren, des Ventilgliedes mit dem Textil verhindert werden kann, sodass das Textil beim Versetzen des Ventilgliedes in einen geöffneten Zustand nicht aus seiner Verankerung losgerissen wird. Insbesondere kann der Anschlagflansch insbesondere zu diesem Zweck Kunststoff umfassen, insbesondere aus Kunststoff bestehen.

Die Erfindung betrifft ferner ein Partikelabscheidungssystem mit zwei der zuvor beschriebenen Partikelabscheider zum Reinigen eines mit Partikeln, wie Fluidpartikeln, beladenen Gasstroms, wobei die Partikelabscheider fluidal zueinander in Verbindung stehen.

Gemäß einer Ausführungsform stehen die zwei Partikelabscheider derart miteinander fluidal in Verbindung, dass der zu reinigende Gasstrom stromaufwärts des Partikelabscheidungssystems in die wenigstens zwei Partikelabscheider aufteilbar ist und/oder ein Gasstrom von einem Partikelabscheider in wenigstens einen weiteren Partikelabscheider gelangen kann.

Ferner betrifft die Erfindung ein Verfahren zum Reinigen eines mit Partikeln, wie Rußpartikeln, beladenen Gasstroms, bei dem der Gasstrom in einem Partikelabscheider gemäß einem der zuvor beschriebenen Aspekte der Erfindung oder einem Partikelabscheidungssystem gemäß einer der zuvor beschriebenen Ausführungsformen eingeleitet wird.

Gemäß einer Ausführungsform des Verfahrens verbleibt der Partikelabscheider bis zu einem Gasstrom von 30 l/min in einem Schließzustand, insbesondere in dem im Zusammenhang mit dem als erstes beschriebenen Aspekt der Erfindung beschriebenen Schließzustand. Alternativ oder zu zusätzlich wird der Partikelabscheider bei dem Verfahren bei einem Gasstrom von mehr als 30 l/min und höchstens 70 l/min in einen teilweise geöffneten Zustand, insbesondere in den wenigstens einen Öffnungszustand gemäß dem als erstes beschriebenen Aspekt der Erfindung, verbracht. Alternativ oder zusätzlich wird der Partikelabscheider bei einem Gasstrom von mehr als 70 l/min in einen vollständig geöffneten Zustand verbracht.

Gemäß einer Ausführungsform des Verfahrens wird der Partikelabscheider in Abhängigkeit des Gasvolumenstroms zwischen dem Schließzustand und dem wenigstens einen Öffnungszustand verlagert.

Das Verfahren kann so eingerichtet/ausgeführt werden, dass es zum Betrieben eines Partikelabscheiders und/oder Partikelabscheidungssystems gemäß einem der zuvor beschriebenen Aspekte der Erfindung eingesetzt werden kann.

Ferner betrifft die Erfindung ein Brennstoffzellensystem für ein Kraftfahrzeug, umfassend eine Brennstoffzelle und eine in einem partikelführenden Leitungssystem angeordneten Partikelabscheider, der gemäß einem oder mehreren der zuvor beschriebenen Aspekte der Erfindung ausgebildet ist. Insbesondere führt das Leitungssystem einen partikelbeladenen Gasstrom. Insbesondere kann das partikelführende Leitungssystem eine Wasserstoffzuführung für die Anode der Brennstoffzelle sein. Dabei kann der Partikelabscheider insbesondere von einem Anodenabgasstrom gespeist werden, dem der Partikelabscheider Wasser entzieht und dieses über einen Ejektor zusammen mit Wasserstoff wieder der Anode zuführt, insbesondere um die Anode mit Wasser zu benetzen.

Ferner betrifft die Erfindung ein Brennstoffzellenfahrzeug mit dem zuvor beschriebenen Brennstoffzellensystem. Dabei kann das Brennstoffzellenfahrzeug das zuvor beschriebene Brennstoffzellensystem aufweisen und ferner eine Kühlung für die Brennstoffzelle, eine Sauerstoffzufuhr für die Kathode der Brennstoffzelle und/oder ein elektrisches System zur Speicherung von durch die Brennstoffzelle bereitgestellter elektrischer Energie und/oder zur Umwandlung der Energie in eine Antriebsleistung des Brennstoffzellenfahrzeugs aufweisen.

Ferner betrifft die Erfindung ein Kurbelgehäuse-Entlüftungssystem für ein Kraftfahrzeug, umfassend ein Kurbelgehäuse mit einer Strömungsaustrittsöffnung zum Abführen von Blow-By-Gasen aus dem Kurbelgehäuse und einem Partikelabscheider oder einem Partikelabscheidungssystem nach einem oder mehreren der zuvor beschriebenen Aspekte der Erfindung, der/das zum Reinigen des Blow-By-Gases von Ölpartikeln fluidal mit der Strömungsaustrittsöffnung in Verbindung steht.

Bevorzugte Ausgestaltungen sind in den Unteransprüchen angegeben.
Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine Schnittansicht einer beispielhaften Ausführung eines erfindungsgemäßen Partikelabscheiders im Schließzustand;
- Figur 2: der Partikelabscheider aus Figur 1 in einem Öffnungszustand;
- Figur 3: der Partikelabscheider aus Figur 1 bzw. Figur 2 in einem weiteren Öffnungszustand;
- Figur 4: eine Seitenansicht auf ein Stellglied eines erfindungsgemäßen Partikelabscheiders;
- Figur 5: Eine Ansicht auf die dem Gasstrom-Eingang des Partikelabscheiders zugewandte Seite des Stellglieds aus Figur 4;
- Figur 6: eine Schnittansicht des Stellglieds aus Figur 4;
- Figur 7: eine Schnittansicht eines einen Ventilsitz bildenden Gehäuseteils;
- Figur 8: eine perspektivische Ansicht einer weiteren beispielhaften Ausführung eines einen Ventilsitz bildenden Gehäuseteils eines erfindungsgemäßen Partikelabscheiders;
- Figur 9: eine Schnittansicht eines Partikelabscheidungssystems mit zwei erfindungsgemäßen Partikelabscheidern, von denen der linke Partikelabscheider in einem Öffnungszustand und die rechte Abscheideeinrichtung im Schließzustand dargestellt sind;
- Figur 10: ein Kurbelgehäuseentlüftungssystem in einer Prinzipskizze eines Beispiels zur Entstehung von Blow-By-Gasen und zur Einbauposition von erfindungsgemäßen Partikelabscheidern und Partikelabscheidungssystems; und
- Figur 11: ein Schaltbild eines in den Antrieb eines Kraftfahrzeugs integrierten Brennstoffzellensystems zur Darstellung der Einbauposition von erfindungsgemäßen Partikelabscheidern und Partikelabscheidungssystems.

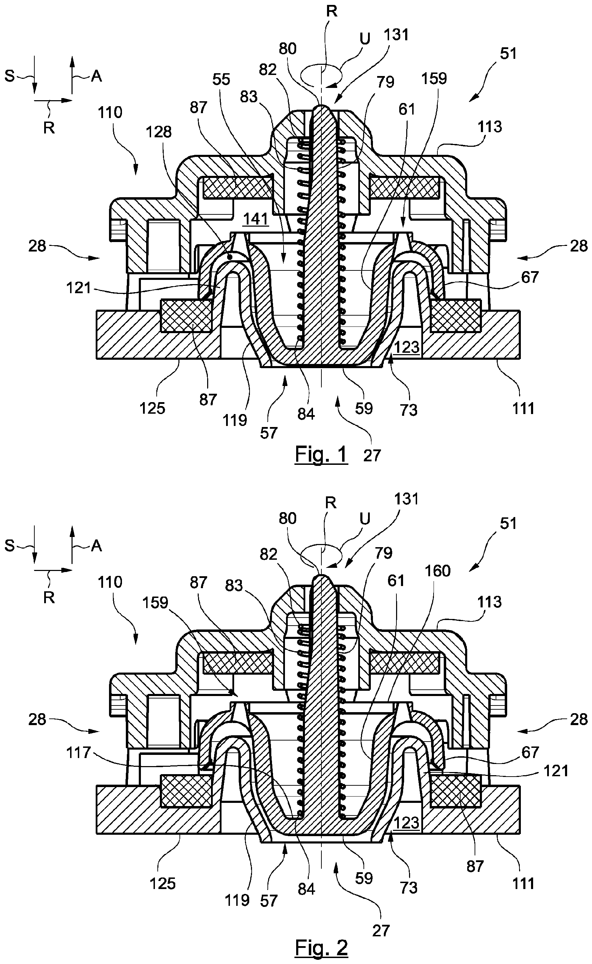

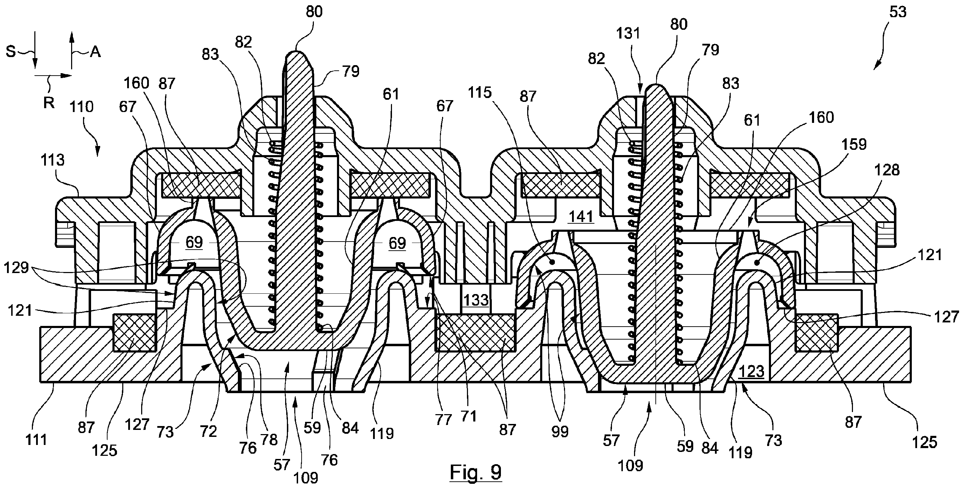

Die Figuren 1 bis 3 zeigt eine Ausführungsform eines Partikelabscheiders 51, bei dem das Ventilglied 55 im Schließzustand in Anschlagkontakt mit dem Textil 87 ist. Bevorzugt ist jedoch eine Ausführungsform der Erfindung, wie sie in Figur 9 dargestellt ist, in der das Ventilglied 57 im Schließzustand (rechts dargestellt) frei von einem Anschlagkontakt mit dem Textil 87 ist. Hierfür wurde ein Anschlagsflansch 127 vorgesehen, der im Schließzustand einen Abstand zwischen Ventilglied 55 und Textil 87 bereitstellt. Folgend wird kurz die Funktionsweise von Partikelabscheidern gemäß den drei unabhängigen Ansprüchen der vorliegenden Erfindung anhand der Figuren 1 bis 3 erläutert und anschließend anhand der verbleibenden Figuren die detaillierte Ausgestaltung der vorliegenden Erfindung beschrieben.

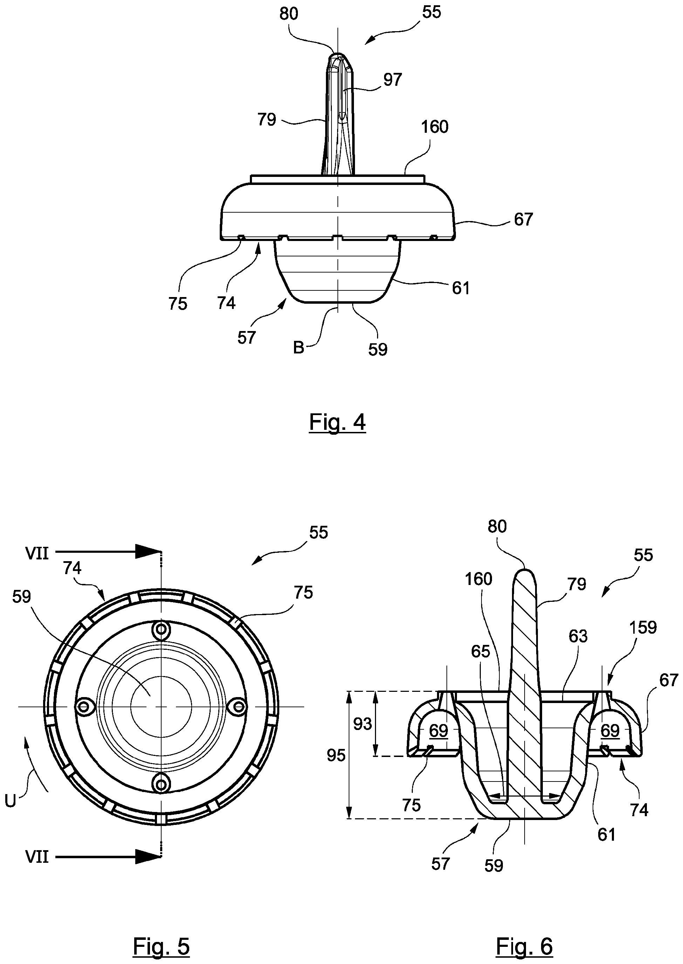

In Figur 1 ist der Schließzustand eines erfindungsgemäßen Partikelabscheiders 51 dargestellt, in dem eine Leckage-Strömung zwischen dem Gasstromeingang 27 und dem Gasstromausgang 28 zugelassen ist. Die Leckage-Strömung tritt über den Gasstromeingang 27 in den Partikelabscheider 51 ein, strömt entlang eines kragenförmigen Spaltes 128 zwischen Ventilsitz 73 und Ventilglied 55, verlässt den kragenförmigen Spalt 128 in Form eines Teil-Leckagestroms über Durchtrittsöffnungen 159 und in Form eines zweiten Teil-Leckagestroms über die den Figuren 4 bis 6 zu entnehmende Konturierung 74 mit Vertiefungen 75 der Axialanschlagfläche 71 des Ventilkragens 67. Dabei bildet der kragenförmige Spalt 128 den Ablenkleitungskanal, der einen der Teil-Leckageströme um 180° in Bezug auf die Einströmrichtung A ablenkt. Dabei ist ein Textil 87 in das Anströmgehäuseteil 111 eingebracht, sodass der um 180° abgelenkte Teil-Leckagestrom auf das Textil 87 trifft. Ein zweites Textil 87 ist im Deckelgehäuseteil 113 eingebracht, sodass auch der im Wesentlichen nicht abgelenkte Teil-Leckagestrom, der über die Durchtrittsöffnung 159 entweicht, auf ein Textil 87 trifft. Anschließend verlassen die Teil-Leckage-Ströme den Partikelabscheider 51 über den Gasstromausgang 28.

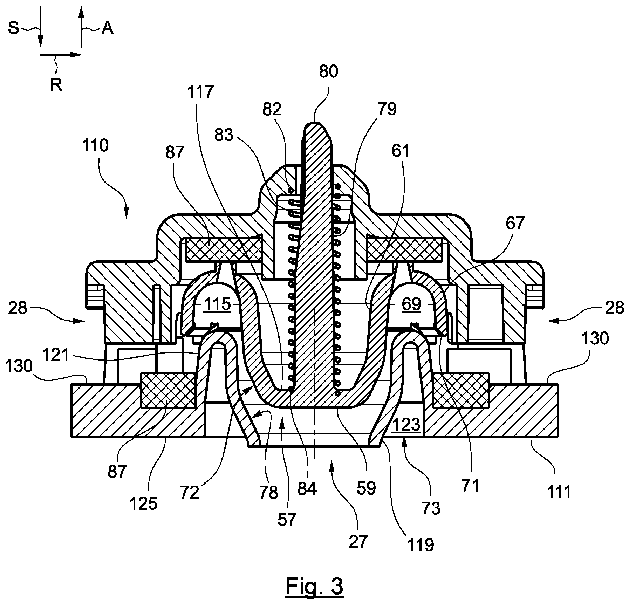

Figur 2 zeigt einen teilweise geöffneten Zustand, in dem weiterhin über die Durchtrittsöffnungen 159 ein Leckage-Strom vorliegt, jedoch zusätzlich dazu ein Großvolumenstrom stromabwärts des Ventilgliedkragens 67 auf das Textil 87 trifft. In diesem Zustand trifft ein im Wesentlichen unabgelenkter Leckage-Strom über die Durchtrittsöffnung 159 auf das im Gehäusedeckel 113 angeordnete weitere Textil 87, während ein um im Wesentlichen 180° abgelenkter Großvolumenstrom auf das im Einströmgehäuseteil angeordnete Textil 87 trifft. Figur 3 zeigt einen vollständig geöffneten Zustand, in dem das Ventilglied 55 in Anschlagkontakt mit dem im Gehäusedeckelteil 113 angeordneten Textil 87 ist und dadurch die Durchtrittsöffnungen 159 im Wesentlichen versperrt. In diesem Zustand wird der Gasstrom im Wesentlichen vollständig als Großvolumenströmung um 180° umgelenkt und trifft anschließend auf das im Anströmgehäuseteil 125 angeordnete Textil 87.

Gemäß dem als zweites beschriebenen Aspekt der Erfindung kann das im Anströmgehäuseteil 125 angeordnete Textil 87 und/oder das im Deckelgehäuseteil angeordnete Textil 87 mit der zuvor beschriebenen Beschichtung versehen werden, die das Anhaften von Partikeln am Textil reduziert. Der in Zusammenhang mit diesem Aspekt der Erfindung beschriebene Leitungskanal kann den gesamten Abscheideraum 115 umfassen, der seinerseits den Bypassraum 141 sowie den kragenförmigen Spalt 128 aufweisen kann.

Bezüglich den als drittes beschriebenen Aspekts der Erfindung ist der Gasstromteiler in den Figuren 1 bis 3 durch die Durchtrittsöffnungen 159 im Ventilglied 55 realisiert. Dieser teilt den Gasstrom in Figur 1 in einen Teil-Leckagestrom, der über die Durchtrittsöffnungen 159 entweicht und einen Teil-Leckagestrom, der über die Konturierung 74 des Ventilglieds 55 entweicht, auf. Die Ablenkleitungsstruktur wird hier durch den Ventilgliedkragen 67 realisiert, der den im kragenförmigen Spalt 128 verbleibenden Teil-Leckage-Strom stärker ablenkt als den über die Durchtrittsöffnung 159 austretenden Teil-Leckage-Strom, nämlich um etwa 180°. In Figur 2 erfolgt die Aufteilung über den Gasstromteiler ähnlich wie in Figur 1, jedoch mit dem Unterschied, dass in Figur 2 der stärker abgelenkte Gasstrom nicht mehr ein Teil-Leckage-Strom, sondern der Großvolumenstrom ist. In Figur 3 werden die Durchtrittsöffnungen 159 durch das im Deckelgehäuseteil 113 angeordnete Textil 87 im Wesentlichen verschlossen, sodass im vollständig geöffneten Zustand im Wesentlichen keine Aufteilung über den Gasstromteiler erfolgt.

In den Figuren 4 bis 6 ist eine beispielhafte Ausführungsform eines Ventilglieds 55 für einen erfindungsgemäße Partikelabscheider 51 in Seitenansicht (Figur 4), Unteransicht (Figur 5) und Schnittansicht entlang der Schnittlinie VII-VII (Figur 6) dargestellt. Das Ventilglied 55 umfasst einen Napf 57 mit einem sich im Wesentlichen in Radialrichtung R, insbesondere scheibenförmig, erstreckenden Napfgrund 59. Von dem Napfgrund 59 erstreckt sich ein Mantel 61 im Wesentlichen in Stellrichtung A. Der Mantel 61 und der Napfgrund 59 bilden einen in Stellrichtung A zu einer Seite 58 hin offenen Napf 57. In einer zur Stellrichtung A entgegengesetzt orientierten Schließrichtung S verjüngt der Mantel 61 sich und mündet in den vorzugsweise scheibenförmigen Napfgrund 59. Vorzugsweise sind der Napfgrund 59 und der Mantel 61 rotationsförmig ausgebildet, wobei die Verjüngung des Mantels 61 vorzugsweise derart beschränkt ist, dass der maximale Innendurchmesser 63 des Mantels 61 höchstens 30 %, 50 %, 70 % oder 110 % größer ist als der minimale Innendurchmesser 65 des Mantels 61. An den Mantel 61, insbesondere an das in Stellrichtung A weisende Ende des Mantels 61, schließt ein Ventilgliedkragen 67, der auch als Umlenkschirm 67 bezeichnet werden kann, an, bzw. mündet in diesen. Der Ventilgliedkragen 67 ist vorzugsweise rotationsförmig ausgestaltet und erstreckt sich, insbesondere bogenförmig, beginnend vom Mantel 61 zunächst im Wesentlichen in Radialrichtung R und im Anschluss im Wesentlichen in Schließrichtung S. Der Ventilgliedkragen 67 und der Napf 57, insbesondere der Mantel 61, begrenzen einen in Schließrichtung S offenen Ringraum 69 des Ventilglieds 55.

Vorzugsweise bildet ein in Schließrichtung S weisendes Ende des Kragens 67 eine im Wesentlichen umlaufende axiale Anschlagkontaktfläche 71 des Ventilglieds 57 für den Anschlagkontakt zwischen Ventilglied 57 und Ventilsitz 73. Ein Anschlagkontakt zwischen Ventilglied 55 und Ventilsitz 73 ist anhand des in Figur 9 rechts abgebildeten Partikelabscheiders 31 zu erkennen. Eine Umfangsrichtung ist im Folgenden mit dem Bezugszeichen U gekennzeichnet.

Wie in den Figuren 4 bis 6 zu sehen ist, kann die Anschlagkontaktfläche 71 des Ventilglieds 57 und/oder eine Anschlagkontaktfläche 77 des Ventilsitzes 73 konturiert sein, um eine Leckageströmung in der Schließstellung, also in dem Anschlagkontakt, des Partikelabscheiders 51 zuzulassen. Die Konturierung, die allgemein durch die Bezugsziffer 74 angedeutet ist, der wenigstens einen Anschlagkontaktfläche 71 kann wenigstens einen Vorsprung und/oder wenigstens eine Vertiefung 75 aufweisen. Die Konturierung 74 bewirkt dabei beispielsweise, dass in der Schließstellung ein wenigstens abschnittsweise in Umfangsrichtung U umlaufender Spalt (nicht dargestellt) zwischen Ventilglied 55 und Ventilsitz 73 besteht. Eine Spalterstreckung in Umfangsrichtung U und/oder eine Spaltabmessung in Axialrichtung kann dabei in Abhängigkeit eines vordefinierten einzustellenden Leckageströmung, die in der Schließposition zugelassen sein soll, bemessen sein. In den dargestellten Ausführungsformen umfasst die Konturierung mehrere Vertiefungen 75 (Ausnehmungen) an der Anschlagkontaktfläche 71 des Ventilgliedkragens 67. Die mehreren Vertiefungen 75 sind umfänglich, insbesondere in äquidistanten Abständen zueinander, an der Konturierung 74, insbesondere an dem Ventilsitzkragen 67, verteilt. In der vorliegenden Ausführungsform umfasst die Konturierung 74 dreizehn Vertiefungen 75. Es können aber auch mehr oder weniger Vertiefungen 75 vorgesehen sein. In den dargestellten Beispielen sind die Vertiefungen 75 beispielhaft im Querschnitt rechteckförmig dargestellt. Sie können aber andere Querschnittsformen, wie zum Beispiel die eines Kreises, einer Ellipse, eines Dreiecks, eines Fünfecks, etc. aufweisen. Es hat sich als vorteilhaft herausgestellt, die Vertiefungen 75 ausgehend von einer sich in Radialrichtung R erstreckenden Ebene stromabwärts in Schließrichtung S zu neigen, um den Durchtritt, der über die Konturierung erfolgt auf die Anschlagkontaktfläche 77 des Ventilsitzes 73 zu richten, wodurch sich der Abscheidegrad, d. h. die Effizienz der Abscheideeinrichtung 51, erhöhen lässt.

In dem Ventilglied 55 sind Durchtrittsöffnungen 159 zum Ermöglichen der Leckageströmung in der Schließstellung vorgesehen. Diese Durchtrittsöffnungen 159 können zusätzlich oder alternativ zu der zuvor beschriebenen Konturierung 74 vorgesehen sein. In dem hier dargestellten Beispiel sind die Durchtrittsöffnungen 159 als vier Bohrungen ausgebildet, die in Umfangsrichtung in äquidistanten Abständen in das Ventilglied 55 eingebracht sind. Diese erstrecken sich in Stellrichtung A durch das Ventilglied 55 hindurch. Vorliegend sind die Durchtrittsöffnungen 159 in den in Radialrichtung R direkt an den Mantel 61 anschließenden Teil des Ventilkragens 67 ausgebildet. Dadurch kann insbesondere gewährleistet werden, dass durch die Durchtrittsöffnungen 159 austretende Teilströme der Leckageströmung weniger stark von dem Ventilglied umgelenkt werden, als über die Konturierung 74 austretende Teilströme der Leckageströmung.

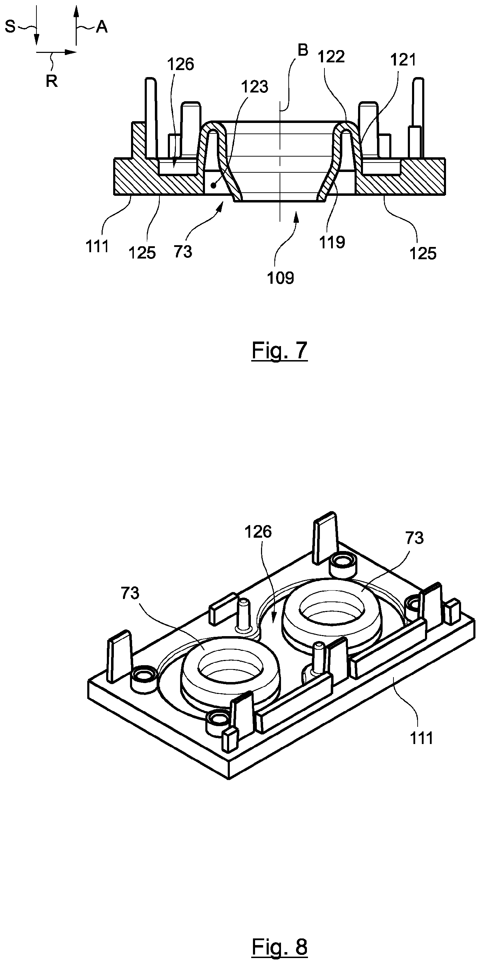

In Figur 7 ist das Einströmgehäuseteil 125 ohne Deckelgehäuseteil 113, ohne Ventilglied 55 und ohne Textil 87 dargestellt. Wie Figur 7 zu entnehmen ist, ist die Textilaufnahme 126 im Wesentlichen als Ringspalt ausgebildet.

Figur 8 zeigt ein exemplarisches Einströmgehäuseteil 125 in perspektivischer Ansicht, aus der ersichtlich ist, dass die Textilaufnahmen 126 insbesondere als ringförmige Spalte ausgebildet sind. Wie Figur 8 zu entnehmen ist, können beide Partikelabscheidungssysteme mit beispielsweise zwei Partikelabscheidern ineinander übergehen, sodass in diese eingesetzte Textile, insbesondere ringförmige Textile, einander kontaktieren können.

Figur 9 zeigt eine beispielhafte Ausführung eines erfindungsgemäßen Partikelabscheidungssystems, der zwei erfindungsgemäße und fluidal miteinander in Verbindung stehende Partikelabscheider 51 aufweist, wobei der linke Partikelabscheider 51 im vollständig geöffneten Zustand und der rechte Partikelabscheider 51 im Schließzustand dargestellt ist. Die in Figur 9 dargestellten Ventilglieder 55 der Abscheideeinrichtungen 51 entsprechen im Wesentlichen dem in den Figuren 4 bis 6 dargestellten Ventilglied.

Die Partikelabscheider 51 des Partikelabscheidungssystems 53 sind parallel zueinander angeordnet und stehen fluidal miteinander in Verbindung. Mit parallel zueinander angeordnet ist dabei gemeint, dass die Partikelabscheider 51 so angeordnet sind, dass ein auf das Partikelabscheidungssystem 53 auftreffender Gasstrom gleichzeitig in beide Partikelabscheider 51 gelangen kann, bzw. sich in die beiden Partikelabscheider 51 aufteilen kann. Jeder Partikelabscheider 51 weist einen Gasstrom-Eingang 27 auf, über den ein auf das Partikelabscheidungssystem 53 treffender Gasstrom in beide Partikelabscheider 51 aufteilbar ist. Auch wenn in Figur 9 lediglich die Kopplung von zwei Partikelabscheider 51 in Form eines Partikelabscheidungssystem 53 dargestellt ist, sei klar, dass die vorangegangene und nachfolgende Beschreibung der Partikelabscheider 51 sowohl für einen Partikelabscheidungssystem 53 mit zwei Partikelabscheidern 51, als auch für ein Partikelabscheidungssystem 53 mit mehr als zwei parallel zueinander angeordneten Partikelabscheidern 51 Geltung hat.

Der Partikelabscheider 51 umfasst ein insbesondere zweiteiliges Gehäuse 110. Das Gehäuse 110 umfasst ein Anströmgehäuseteil 111 und ein damit verbindbares bzw. verbundenes Deckelgehäuseteil 113. Das Anströmgehäuseteil 111 und das Deckelgehäuseteil 113 können insbesondere über eine Klippverbindung (nicht dargestellt) lösbar miteinander verbunden werden. Das Anströmgehäuseteil 111 kann insbesondere über eine Nut-Feder-Verbindung mit einem Kurbelgehäuse verbunden werden (nicht dargestellt). In einer bevorzugten Ausführungsform kann das Anströmgehäuseteil 111 über eine Nut-Feder-Verbindung mit einem Kurbelgehäuse verbunden werden. Der Partikelabscheider 51 umfasst einen Ventilsitz 73, der den Gasstrom-Eingang 27 begrenzt. Der Ventilsitz 73 ist Teil des Gehäuses 110, insbesondere Teil des Anströmgehäuseteils 111. Vorzugsweise sind Ventilsitz 73 und Anströmgehäuseteil 111 aus einem Stück hergestellt. Bei dem dargestellten Partikelabscheidungssystem 53 sind die Ventilsitze 73 der zwei Partikelabscheider 51 und die Anströmgehäuseteile 111 aus einem Stück hergestellt. Die Deckelgehäuseteile 113 der zwei Partikelabscheider 51 sind ebenfalls aus einem Stück hergestellt. Beispielsweise kommen Spritzgussverfahren zum Einsatz.

Das Gehäuse 110 begrenzt einen Abscheideraum 115 zum Abscheiden von Partikeln aus dem Gasstrom und zum Lagern und Führen des Ventilglieds 55. Das Ventilglied 55 ist in dem Abscheideraum 115 montiert. In dem Schließzustand steht das Ventilglied 55 mit dem Ventilsitz 73 in einem Anschlagkontakt. Im Anschlagkontakt stehen die radialen und axialen Anschlagkontaktflächen 71, 72 des Ventilglieds 55 sowie die radiale und axiale Anschlagkontaktfläche 77, 78 des Ventilsitzes 73 miteinander in Kontakt. Dabei wird das Ventilglied 55 über eine Feder 83, die beispielsweise als Schraubenfeder ausgebildet ist und sich mit einem Axialende 84 an dem Ventilglied 55 abstützt, gegen den Ventilsitz 73 gedrückt. Mit einem dem Axialende 84 entgegengesetzt liegenden Axialende 82 stützt die Feder 83 sich an dem Deckelgehäuseteil 113 ab. Wirkt ein Gasstrom mit ausreichendem Druck gegen das Ventilglied 55, so wird dieses in Stellrichtung A aus dem Schließzustand in einen Öffnungszustand bewegt. Dabei wirkt der Gasstrom gegen die Federkraft der Feder 83, wobei beispielsweise auch eine Mehrfederanordnung, wie eine Hintereinanderschaltung wenigstens zweier Federn 83, vorgesehen sein kann. Bei Verlagerung des Ventilglieds 55 in Stellrichtung A wird die Feder 83, die sich zwischen Ventilglied 55 und Deckelgehäuseteil 113 abstützt, gestaucht. Mit zunehmender Verlagerung des Ventilglieds 55 in Stellrichtung A steigt die gegen die Verlagerungsbewegungen des Ventilglieds 55 wirkende Federkraft. Durch Verwendung von Federn mit progressiv gewickelter Federkennlinie und/oder durch die Nutzung mehrerer in Reihe geschalteter Federn kann die Federkennlinie an ein gewünschtes Ansprechverhalten des Ventilglieds 55 angepasst werden.

Die Feder 83 ist über den Führungszapfen 79 gestülpt, der sich von dem Napf 57, insbesondere von dem Napfgrund 59, in Stellrichtung A erstreckt. An einem dem Napfgrund 59 in Stellrichtung A gegenüberliegenden Teil des Gehäuses, insbesondere des Deckelgehäuseteils 113, ist eine Durchtrittsöffnung 131 für den Führungszapfen 79 vorgesehen, in bzw. durch den der Führungszapfen 79 ragt. Die Durchtrittsöffnung 131 ist derart dimensioniert, dass sie das Ventilglied 55 bei Verlagerung in Stell- und/oder Schließrichtung A, S führt.

In Figur 6 ist die axiale Erstreckung des Ventilgliedkragens 67, der auch als Umlenkschirms 67 bezeichnet werden kann, entgegen der axialen Stellrichtung A mit der Bezugsziffer 93 verstehen. Die Axialabmessung des Napfes ist mit der Bezugsziffer 95 versehen. Um die zuvor beschriebene bevorzugte maximale Axialerstreckung des Ventilgliedkragens 67 in Relation zur Axialabmessung des Napfes zu ermitteln, kann der Quotient aus der Axialerstreckung 93 des Ventilgliedkragens und der Axialerstreckung 95 des Napfes gebildet werden. Wie zuvor beschrieben ist dieser Quotient vorzugsweise kleiner als 60 %, insbesondere kleiner als 55 % oder 50 %.

An einem in Stellrichtung A betrachtet oberen Ende 80 des Führungszapfens 79 in Stellrichtung A erstrecket sich wenigstens eine Führungsnase 97 in Radialrichtung R, wobei beispielhaft mehrere Führungsnasen 97 vorgesehen sind, welche im Wesentlichen in Umfangsrichtung U verteilt an dem Führungszapfen 79 angeordnet sind. Die Führungsnasen 97 dienen insbesondere der Führung des Führungszapfens 79, vorzugsweise in einem Gehäuse des Partikelabscheiders 51, wobei die Führungsnasen 97 insbesondere in dafür vorgesehene Führungsnuten (nicht dargestellt) eingreifen können.

Der Raumbedarf der Feder 83, insbesondere in Stellrichtung A, wird dadurch reduziert, dass die Feder 83 am Napf 57, insbesondere am Napfgrund 59, abgestützt wird, wobei eine Abstützstelle 117 an einer in Stellrichtung A betrachtet tiefsten Position an einer in Stellrichtung A weisenden Napfseite gebildet ist. Alternativ oder zusätzlich wird der Raumbedarf für die Feder 83 dadurch reduziert, dass die Abstützstelle 117 der Feder 83 und/oder der Napfgrund 59 in Schließposition des Ventilglieds 55 entgegen der Stellrichtung A axial an der Anschlagstelle 71, 77 vorbei vorsteht. Dadurch kann insbesondere die für den Stellweg der Feder 83 erforderliche Gesamterstreckung des Partikelabscheiders 51 zugunsten der Erstreckung in Stellrichtung A teilweise in Schließrichtung S verlagert werden. Dadurch kann insbesondere auch die Gesamtaxialerstreckung einer Anordnung, insbesondere eines Kurbelgehäuseentlüftungssystems 29 umfassend einen Partikelabscheider 51 und eine stromaufwärtig an den Partikelabscheider 51 anschließende Gasstromquelle, wie ein Kurbelgehäuse aus dem Blow-By-Gas in die Abscheideeinrichtung strömt, verringert werden. Dabei wird ausgenutzt, dass die zugunsten der Axialerstreckung in Stellrichtung A in Schließrichtung S verlagerte Erstreckung in einen ohnehin zur Verfügung stehenden Bauraum der Gasstromquelle ragt, sodass der Stellweg der Feder 83 erhöht werden kann, ohne die Gesamtaxialerstreckung der Anordnung zu reduzieren.

Der Ventilsitz 73 ist rotationssymmetrisch ausgebildet. Insbesondere umfasst der Ventilsitz 73 einen Hohlkörper 119, der komplementär zu dem Napf 57 des Ventilglieds 55 geformt ist. Der Napf 57 und/oder der Hohlkörper 119 verjüngen sich in Schließrichtung S. Dabei sind der Napf 57 und der Hohlkörper 119 insbesondere komplementär zueinander geformt. Zur Verlagerung des Ventilglieds 55 in Schließ- und/oder Öffnungsposition ist der Napf 57 teleskopartig in den Hohlkörper 119 verschiebbar. Durch die komplementäre Ausgestaltung von Napf 57 und Hohlkörper 119 wird das Ventilglied 55 bei der Verlagerung in Stell- und Schließrichtung A, S von dem Ventilsitz 73, insbesondere von den Hohlkörper 119, in Stell-/Schließrichtug A, S geführt. Es sei klar, dass eine gewisse Relativbewegung des geführten Ventilglieds 55 in einer zur Stell-/Schließrichtug A, S quer, insbesondere senkrecht, orientierten Richtung möglich ist. Unter "geführt" ist in diesem Zusammenhang insbesondere zu verstehen, dass die Bewegung des geführten Teils, des Ventilglieds 55, in andere Richtungen durch die Führung wenigstens beschränkt wird bzw. eine Zentrierung des Teils, des Ventilglieds 55, erfolgt.

Wie in Figur 9 zu sehen, ist bei der vorliegenden Anordnung zwischen Napf 57 und Hohlkörper 119 im vollständig geöffneten Zustand des Partikelabscheiders 51 (links dargestellt) ein Spiel in Radialrichtung R vorhanden, sodass die Führung des Hohlkörpers 119 eine gewisse Bewegung in Radialrichtung R zulässt. Im Vergleich dazu reduziert der Kontakt des Napfes 57 mit dem wenigstens einen Radialvorpsrung 76 des Hohlkörpers 119 in Figur 9 bei der Abscheideeinrichtung 51 in Schließstellung (rechts dargestellt) das Spiel zwischen dem Napf 57 und dem Hohlkörper 119 vorhanden.

Der Ventilsitz 73 umfasst ferner einen Ventilsitzkragen 121, der in den Hohlkörper 119 mündet. Dabei erstreckt sich der Ventilsitzkragen 121 von einem in Stellrichtung A betrachteten Ende 122 des Hohlkörpers 119 zunächst bogenförmig in Radialrichtung R und anschließend im Wesentlichen in Schließrichtung S. Dabei begrenzen Hohlkörper 119 und Ventilsitzkragen 121 einen in Schließrichtung S offenen Ringraum 123. Der Hohlkörper 119 und der Ventilsitzkragen 121 ragen in den Ringraum 115, der von dem Ventilglied 55 begrenzt wird. Insbesondere werden der Hohlkörper 119 und der Ventilsitzkragen 121 in der Schließposition in Radialrichtung R von dem Ventilglied 55 umschlossen.

In dem in Figur 9 rechts dargestellten Partikelabscheider 51 stehen Ventilglied 55 und Ventilsitz 73 im Schließzustand in einem axialen Anschlagkontakt und in einem radialen Anschlagkontakt.

Der radiale Anschlagkontakt wird durch eine radiale Anschlagkontaktfläche 72 des Napfes 57 und eine radiale Anschlagkontaktfläche 78 des Hohlkörpers 119 gebildet. Hierfür weist der Hohlkörper 119 an seiner Innenseite wenigstens einen Radialvorsprung 76 auf. Dabei wird die radiale Anschlagkontaktfläche 78 des Hohlkörpers durch die dem Napf 57 im Schließzustand zugewandte Fläche gebildet. Die radiale Anschlagkontaktfläche 78 des Hohlkörpers 119 ist komplementär zu der radialen Anschlagkontaktfläche des Napfes ausgebildet, um im Schließzustand einen flächigen radialen Anschlagkontakt zu bilden. Wie Figur 9 entnehmbar ist, kann der Hohlkörper 119 zur Ausbildung des radialen Anschlagkontakts mehrere in Umfangrichtung U zueinander versetzte Radialvorsprünge 76 aufweisen. Um im Schließzustand die zuvor beschriebene Leckageströmung zuzulassen, ist der wenigstens eine Radialvorsprung 76 nicht als in Umfangsrichtung durchgehender Vorsprung ausgebildet, sodass auch im Schließzustand wenigstens ein Leckageströmungskanal zwischen dem Napf 57 und dem Hohlkörper 119 gebildet wird.

Der axiale Anschlagkontakt wird durch eine axiale Anschlagkontaktfläche 71 des Umlenkschirms 67 und eine axiale Anschlagkontaktfläche 77 des Anströmgehäuseteils 111 gebildet. Hierfür ist am Anströmgehäuseteils 111 ein Anschlagflansch 125 ausgebildet. Die dem Umlenkschirm in Stellrichtung A zugewandte Fläche des Anschlagflansches 125 bildet die axiale Anschlagkontaktfläche 77 des Anströmgehäuseteils 111. Der Anschlagflansch 125 schließt stromabwärts an den Ventilsitzkragen 121 an und erstreckt sich von diesem in Schließrichtung S, wo er in einen Radialsteg 125 des Anströmgehäuseteils 111 übergeht. Die axiale Anschlagkontaktfläche 71 des Umlenkschirms 67, wird durch deren dem Anschlagflansch 127 in Schließrichtung zugewandte Seite gebildet. Dabei weist der Umlenkschirm eine Konturierung mit Vorsprüngen - zur Bildung der Anschlagkontaktfläche 77 - und Vertiefungen 75 - zur Gewährleistung der Leckageströmung im Schließzustand - auf.

Zur Bildung der zuvor beschriebenen Textilaufnahme 126 im Anströmgehäuseteil 111, ist der Radialsteg 125 stromabwärts durch einen Axialsteg 130 begrenzt, der sich von dem Radialsteg 125 aus in Stellrichtung A erstreckt. Dadurch wird zwischen dem Anschlagflansch 127 und dem Radialsteg 125 eine Textilaufnahme 126im Anströmgehäuseteil 111 gebildet. Vorzugsweise begrenzt die Textilaufnahme 126 einen ringförmigen Spalt 126. Beim Einsatz eines einzelnen Partikelabscheiders 51 kann der Axialsteg 130 den Radialsteg 125 hierzu, wie in Figur 8 angedeutet, in Umfangsrichtung U umlaufen. Bei einem Partikelabscheidungssystem 53 mit zwei Partikelabscheidern 51 kann die Erstreckung des Axialstegs 130 in Umfangsrichtung, wie in Figur 9 dargestellt, an den einander in Radialrichtung R zugewandten Seiten der Partikelabscheider 51 unterbrochen sein, sodass die Textilaufnahmen 126 an dieser Stelle ineinander übergehen. In dem Partikelabscheidungssystem 53 gemäß Figur 9 sind in jeder der in dem Anströmungsgehäuseteil 111 ausgebildeten Textilaufnahmen 126 jeweils ein ringförmiges Textil 87 eingelegt.

Die in Figur 9 dargestellten Ventilglieder 55 und Ventilsitze 73 sind derart kragenförmig, insbesondere teleskopartig ineinander verschiebbar, ausgebildet, dass zwischen Ventilglied 55 und Ventilsitz 73, insbesondere in Schließstellung, ein kragenförmiger Spalt 128 ausgebildet ist. Der kragenförmige Spalt 128 wird insbesondere zwischen Strömungsleitflächen 129 des Ventilsitzes 73 und Strömungsleitflächen 99 des Ventilglieds 55 ausgebildet. Die Strömungsleitflächen 129 des Ventilsitzes 73 sind insbesondere durch die in Radialrichtung R innenliegenden und mit dem Gasstrom in Kontakt geratenen Oberflächen des Hohlkörpers 119 und durch die in Radialrichtung R außenliegende Oberfläche des Ventilsitzkragens 121 gebildet. Der kragenförmige Spalt 128 bewirkt eine Umlenkung des Gasstroms um wenigstens 90°, 100°, 110°, 120°, 130°, 140°, 150° ,160° ,170° oder 180°, wobei der Gasstrom zwischen den Strömungsleitflächen 99, 129 des Ventilglieds 55 und des Ventilsitzes 73 strömt.

Der durch das Gehäuse 110 begrenzte Abscheideraum 115 wird durch das Ventilglied 55 in einen Strömungsraum zwischen Ventilglied 55 und Ventilsitz 73 und in einen Bypassraum 141 zwischen Ventilglied 55 und Deckelteil 113 unterteilt. Durch den Strömungsraum strömt der Gasstrom entlang der Strömungsleitflächen 99, 129 zwischen Ventilsitz 73 und Ventilglied 55. Über die die Konturierung 74 und die Durchtrittsöffnungen 159 in dem Ventilglied 55 kann der Gasstrom selbst in der Schließposition des Ventilglieds 55 in den Bypassraum 141 gelangen, in dem ebenfalls Partikel abgeschieden werden können. Durch die Konturierung 74 der Anschlagsfläche 71 und die Durchtrittsöffnungen 159 kann ein Gasstrom auch in Schließstellung beider Ventilglieder 55 von der einen Abscheideeinrichtung 51 in die andere gelangen, und umgekehrt.

Zusätzlich zu dem Textil in dem Anströmgehäuseteil 111 ist in Figur 9 in dem Bypassraum 141 ein Textil 87 in einer ringförmigen Textilaufnahme des Deckelgehäuseteils 113 vorgesehen. Vorzugsweise werden Textile 87 in Form von Fliesen verwendet. An den Fliesen können Partikel abgeschieden werden können. Dabei muss das Vlies 87 nicht durchströmt werden. Ein Anströmen der Vliese 87 reicht aus, um Partikel an diesen abzuscheiden. Die Vliese 87 sind scheibenförmig, insbesondere ringförmig, ausgebildet.

Stromabwärts des Ventilglieds 55 ist eine Abscheidedüse 133 mit konstantem Durchströmungsquerschnitt zum Zerstäuben und/oder definierten Ableiten des Gasstroms vorgesehen. Die Abscheidedüse bildet insbesondere wenigstens einen Spalt zwischen Deckelgehäuseteil 113 und Anströmgehäuseteil 111 im montierten Zustand ausgebildet. Durch eine im Wesentlichen unbewegliche Befestigung zwischen Deckelgehäuseteil 113 und Anströmgehäuseteil 111, bleibt der Querschnitt des Spalts, und somit der Durchströmungsquerschnitt der Abscheidedüse 133 im Wesentlichen unabhängig von der Position des Ventilglieds 55 konstant. Durch den konstanten Durchströmungsquerschnitt kann selbst bei komplett geöffnetem Ventilglied 55 ein Mindestmaß an Partikelabscheidung über die wenigstens eine Abscheidedüse 133 sichergestellt werden. Die Abscheidedüse 133 ist stromabwärts des Anschlagkontakts zwischen Ventilglied 55 und Ventilsitz 73 ausgebildet.

Wie in Figur 9 zu sehen ist, können wenigstens zwei Partikelabscheider 51 derart fluidal miteinander zu einem Partikelabscheidungssystem 53 verbunden werden, dass ein Gasstrom von dem einen Partikelabscheider 51 in den anderen Partikelabscheider 51 gelangen kann. Insbesondere sind die Partikelabscheider 51 stromabwärts der Abscheidedüse 133 fluidal miteinander verbunden. Eine beispielhafte Ausführung einer derartigen Fluidalverbindung ist in Figur 9 dargestellt. Darin kann ein Gasstrom über die Abscheidedüse 133 des einen Partikelabscheiders 51 dessen Abscheideraum 115 verlassen und über die Abscheidedüse 133 des anderen Partikelabscheiders 51 in dessen Abscheideraum 115 gelangen.

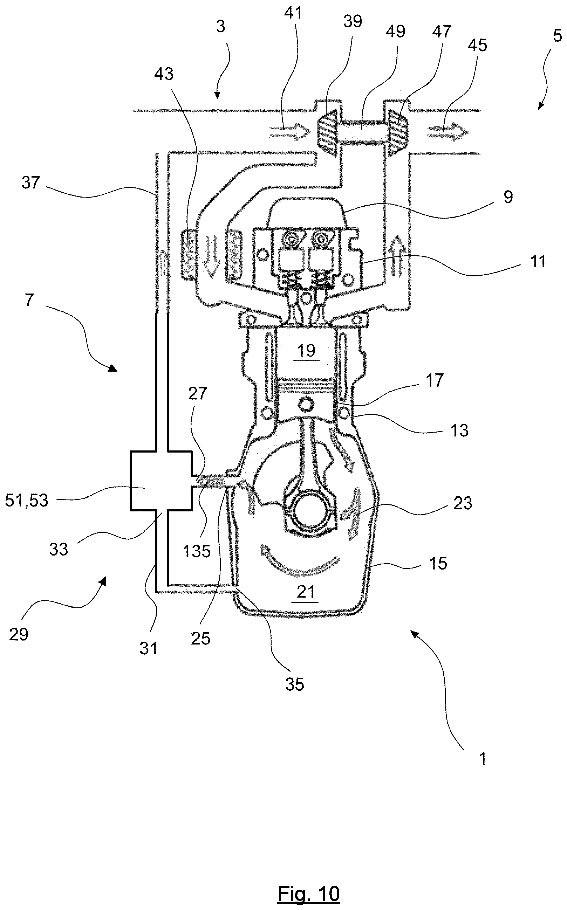

Figur 10 zeigt ein Kurbelgehäuseentlüftungssystems 29 für ein Kraftfahrzeug. Das Kurbelgehäuseentlüftungssystems 29 umfasst ein Kurbelgehäuse 15 mit einer Strömungsaustrittsöffnung 25 zum Abführen von Blow-By-Gas aus dem Kurbelgehäuse 15 und einen mit der Strömungsaustrittsöffnung 25 fluidal in Verbindung stehender, erfindungsgemäßer Partikelabscheider 51, der in Figur 10 schematisch angedeutet ist. Alternativ zu dem Partikelabscheider 51, kann ein erfindungsgemäßes Partikelabscheidungssystem 53 fluidal mit der Strömungsaustrittsöffnung 25 gekoppelt werden kann, um ein Kurbelgehäuseentlüftungssystem 29 zu bilden. Wie in Figur 10 zu sehen, kann die fluidale Verbindung zwischen Partikelabscheider 51 und Strömungsaustrittsöffnung 25 über ein Rohrleitungssystem, wie eine Austrittsleitung 135, realisiert sein, welche die Strömungsaustrittsöffnung 25 des Kurbelgehäuses 15 fluidal mit dem Gasstrom-Eingang 27 des Partikelabscheiders 51 verbindet. Alternativ kann der Partikelabscheider 51 derart an das Kurbelgehäuse 15 moniert werden (nicht dargestellt), dass der Gasstrom-Eingang 27 der Abscheideeinrichtung 51 der Strömungsaustrittsöffnung 25 des Kurbelgehäuses 15 entspricht.

Ferner zeigt Figur 10 eine mögliche Integration des Kurbelgehäuseentlüftungssystems 29 in ein Kraftfahrzeug mit Verbrennungsmotor. Der Verbrennungsmotor 1 umfasst eine Zylinderkopfhaube 9, einen Zylinderkopf 11, einen Zylinder 13 und ein Kurbelgehäuse 15, das unter Ausbildung des Kurbelgehäuseentlüftungssystems 29 wie zuvor beschrieben über dessen Strömungsaustrittsöffnung 25 fluidal mit dem Kurbelgehäuseentlüftungssystem 29 verbunden ist. In dem Zylinder 13 wird ein Kolben 17 geführt, der einen Hubraum 19 gegenüber einem Kurbelgehäuseinnenraum 21 abgrenzt. Zur Abdichtung des Hubraums 19 gegenüber dem Kurbelgehäuseinnenraum 21 können nicht dargestellte Dichtringe zwischen Kolben 17 und Zylinder 13 vorgesehen sein. Nichtsdestotrotz strömen Verbrennungsgase und/oder unverbrannte Gase zwischen Kolben 17 und Zylinder 13 von dem Hubraum 19 in den Kugelgehäuseinnenraum 21. Der dabei resultierende Gasstrom 23 wird auch als Blow-By-Gasstrom bezeichnet und umfasst neben Luft und Öl auch Verbrennungsgase und unverbrannte Kraftstoffbestandteile.

Um einen Druckanstieg im Kurbelgehäuse 15 durch sich darin ansammelnde Blow-By Gase zu verhindern, wird der Gasstrom 23 über das Kurbelgehäuseentlüftungssystem 29 abgeführt. Der Partikelabscheider 51 ist über eine Rücklaufleitung 31 mit dem Kurbelgehäuse 15 verbunden, um abgeschiedenes Öl an das Kurbelgehäuse 15 zurückzuführen. Hierzu verbindet die Rücklaufleitung 31 einen Rücklaufauslass 33 des Partikelabscheiders 51 fluidal mit einem Rücklaufeinlass 35 des Kurbelgehäuses 15. Über eine Rückführleitung 7 wird der von Öl bereinigte Gasstrom einer Frischluftzufuhr 3 des Verbrennungsmotors 1 zugeführt. Der resultierende Frischluftstrom 41 wird über ein Verdichterrad 39 verdichtet und über einen Ladeluftkühler 43 dem Verbrennungsmotor 1 über den Zylinderkopf 11 zugeführt. Verbrennungsgase, die nicht zwischen Kolben 17 und Zylinder 13 in das Kurbelgehäuse 15 gelangen, werden als Abgas 45 über eine Abgasabfuhr 5 einem Turbolader 47 zugeführt, der über eine Welle 49 das Verdichterrad 39 in der Frischluftzufuhr 3 antreibt.

Es sei klar, dass die Einbauposition des erfindungsgemäßen Partikelabscheiders 51 bei der Verwendung als Ölabscheider, insbesondere bei Kraftfahrzeugen, nicht auf die in Figur 10 dargestellte Einbauposition und auch nicht auf den Einsatz in einem Kurbelgehäuseentlüftungssystem 29 beschränkt ist. Beispielsweise kann der Partikelabscheider 51 auch dazu verwendet werden Partikel aus Gasströmen abzuscheiden, die zwischen Zylinder 13 und Zylinderkopf 11 und/oder zwischen Zylinderkopf 11 und Zylinderkopfhaube 9 aus dem Verbrennungsmotor 1 austreten. Ein weiteres mögliches Einsatzgebiet liegt in der Frischluftzufuhr 3 und/oder in der Abgasabfuhr 5, die insbesondere über die das Verdichterrad 39 und das Turbinenrad 47 verbindende Welle 49 fluidal miteinander gekoppelt sein können.

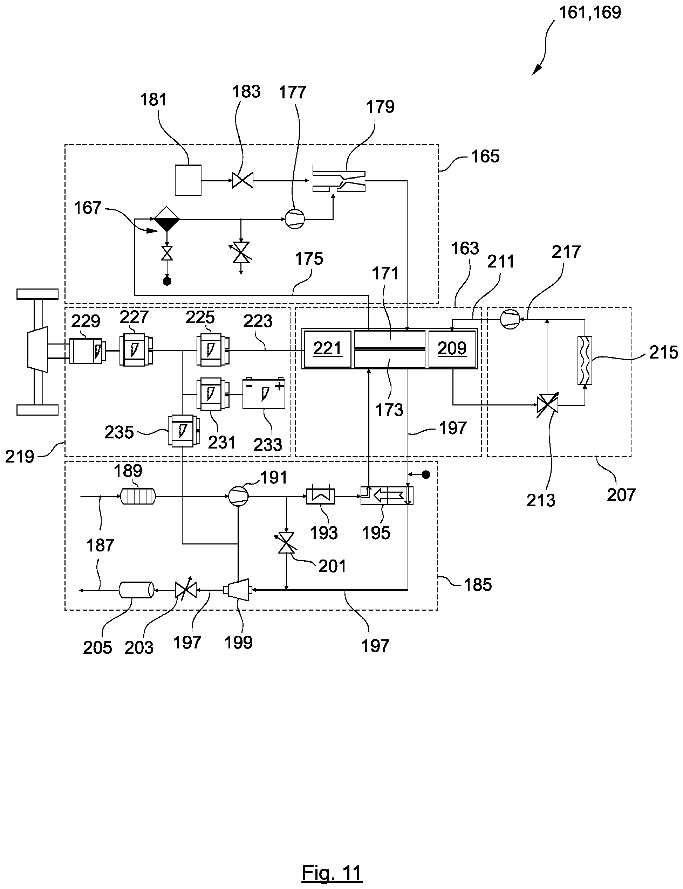

Figur 11 zeigt eine beispielhafte Ausführung eines erfindungsgemäßen Brennstoffzellenfahrzeugs 169 mit einem erfindungsgemäßen Brennstoffzellensystem 161 als Schaltbild. Das Brennstoffzellensystem 161 umfasst eine Brennstoffzelle 163 und ein partikelführendes Leitungssystem 165, in dem ein erfindungsgemäßer Partikelabscheider in Form eines Wasserabscheiders schematisch mit der Bezugsziffer 167 gekennzeichnet ist. Die Brennstoffzelle weist eine Anode 171 und eine Kathode 173 auf. Ein von der Anode 171 austretender Gasstrom 175 wird dem Wasserabscheider 167 zugeführt. Ein Teil der von Wasserabscheider 167 abgeschiedenen Feuchtigkeit, insbesondere Wasser, wird anschließend über eine Rezirkulationspumpe 177 und einen daran anschließenden Ejektor 179 zurück zur Anode geführt, insbesondere um eine Wasserbenetzung auf der Oberfläche der Brennstoffzelle zu erzielen. Dabei kann der Wirkungsgrad der Brennstoffzelle 163 in Abhängigkeit des Wasseranteils und der Gasmenge gesteigert oder gesenkt werden. Zusätzlich wird dem Ejektor 179 aus einem Wasserstofftank 181 Wasserstoff über einen Druckreduzierer 183 zugeführt.

Kathodenseitig weist das Brennstoffzellensystem 161 eine Sauerstoffzuführung 185 auf. Diese führt Luft aus der Umgebung 187 über einen Luftfilter 189 einem Kompressor 191 zu, von wo aus die Luft über einen Ladeluftkühler 193 und einen Befeuchter 195 der Kathode 173 zugeführt wird. Aus der Kathode austretende Gase 197 werden über den Befeuchter 195 abgeführt. Dabei wird Wasser von dem aus der Kathode austretenden Gasstrom an den in die Kathode eintretenden Gasstrom übergeben. Stromabwärts des Befeuchters wird der Kathodenabgasstrom 197 einer Turbine 199 zugeführt, über die der Kompressor 191 angetrieben wird. Vor dem Eintritt in die Turbine 199 kann dem Kathodenabgasstrom Frischluft über ein Stack-Bypass-Ventil 201 zugeführt werden. Stromabwärts der Turbine 199 wird der Kathodenabgasstrom 197 über eine Drosselklappe 203 und einen Schalldämpfer 205 wieder an die Umgebung 187 abgegeben.

Des Weiteren weist das Brennstoffzellensystem 161 ein Kühlsystem 207 auf. Diese führt einer entsprechenden Schnittstelle 209 der Brennstoffzelle 163 ein Kühlmedium 211 zu. Über das Kühlmedium 211 wird die Brennstoffzelle 163 gekühlt. Beim Austreten des Kühlmediums 211 aus der Brennstoffzelle 163 wird dieses über ein Drei-Wege-Ventil 213 einer Wärmesenke 215 zugeführt und von der Wärmesenke 215 über eine Kältepumpe 217 zurück an die Schnittstelle 209 geführt. Über das Drei-Wege-Ventil 213 kann die Wärmesenke 215 teilweise oder ganz überbrückt werden.

Um das zuvor beschriebene Brennstoffzellensystem 22 bei einem Brennstoffzellenfahrzeug 169 einzusetzen, wird die Brennstoffzelle 163 mit einem elektrischen System 219 zur Bereitstellung einer Fahrantriebsleistung für das Brennstoffzellenfahrzeug 169 gekoppelt. Hierzu wird über eine Schnittstelle 221 zum elektrischen System 219 die elektrische Energie 223 der Brennstoffzelle 163 über einen Brennstoffzellen-Boost-Konverter 225 und einem Inverter 227 einem Elektromotor 229 zugeführt, der die Fahrantriebsleistung des Brennstoffzellenfahrzeugs 169 bereitstellt. Bei Bedarf kann eine Batterie 233 mit Batteriekonverter 231 zugeschalten werden. Ferner kann bei Bedarf das elektrische System 219 über einen Kompressor-Inverter 235 mit dem Kompressor 191 und der Turbine 199 der Sauerstoffzuführung 185 gekoppelt werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Verbrennungsmotor
- 3: Frischluftzufuhr
- 5: Abgasabfuhr
- 7: Rückführleitung
- 9: Zylinderkopfhaube
- 11: Zylinderkopf
- 13: Zylinder
- 15: Kurbelgehäuse
- 17: Kolben
- 19: Hubraum
- 21: Kurbelgehäuseinnenraum
- 23: Gasstrom
- 25: Strömungsaustrittsöffnung
- 27: Gasstrom-Eingang
- 28: Gasstrom-Ausgang
- 29: Kurbelgehäuseentlüftungssystem
- 31: Rücklaufleitung
- 33: Rücklaufauslass
- 35: Rücklaufeinlass
- 39: Verdichterrad
- 41: Frischluftstrom
- 43: Ladeluftkühler
- 45: Abgas
- 47: Turbolader
- 49: Welle
- 51: Partikelabscheider
- 53: Partikelabscheidungssystem
- 55: Ventilglied
- 57: Napf
- 59: Napfgrund
- 61: Mantel
- 63: maximaler Innendurchmesser des Mantels
- 65: minimaler Innendurchmesser des Mantels
- 67: Umlenkschirm / Ventilgliedkragen
- 69: Ringraum zwischen Napf und Ventilgliedkragen
- 71: Axiale Anschlagkontaktfläche des Ventilglieds/Umlenkschirms
- 72: Radiale Anschlagkontaktfläche des Ventilglieds / Napfes
- 73: Ventilsitz
- 74: Konturierung
- 75: Vertiefung einer Konturierung
- 76: Radialvorsprung des Hohlkörpers
- 77: Axiale Anschlagkontaktfläche des Anströmgehäuseteils/Ventilsitzes
- 78: Radiale Anschlagkontaktfläche des Anströmgehäuseteils/Ventilsitzes / Hohlkörpers
- 79: Führungszapfen
- 80: Ende
- 83: Feder
- 82, 84: Axialende
- 87: Textil/Vlies
- 93: Axialerstreckung des Ventilkragens
- 95: Axialerstreckung des Napfes
- 97: Führungsnase
- 99: Strömungsleitflächen des Ventilglieds
- 110: Gehäuse
- 111: Anströmgehäuseteil
- 113: Deckelgehäuseteil
- 115: Abscheideraum
- 117: Abstützstelle der Feder am Ventilglied
- 119: Hohlkörper
- 121: Ventilsitzkragen
- 122: Ende
- 123: Ringraum zwischen Hohlkörper und Kragen des Ventilglieds
- 125: Radialsteg
- 126: Textilaufnahme / Ringspalt
- 127: Anschlagflansch
- 128: Kragenförmgier Spalt
- 129: Strömungsleitfläche des Ventilsitzes
- 130: Axialsteg
- 131: Durchtrittsöffnung für Führungszapfen
- 133: Abscheidedüse
- 135: Austrittsleitung
- 141: Bypassraum
- 159: Durchtrittsöffnung / Gasstromteiler
- 160: ringförmiger Anschlag
- 161: Brennstoffzellensystems
- 163: Brennstoffzelle
- 165: Leitungssystem
- 167: Wasserabscheider
- 169: Brennstoffzellenfahrzeug
- 171: Anode
- 173: Kathode
- 175: Anodenstrom
- 177: Rezirkulationspumpe
- 179: Ejektor
- 181: Wasserstofftank
- 183: Druckreduzierer
- 185: Sauerstoffzuführung
- 187: Umgebung
- 189: Luftfilter
- 191: Kompressor
- 193: Ladeluftkühler
- 195: Befeuchter
- 197: Kathodenabgasstrom
- 199: Turbine
- 201: Stack-Bypassventil
- 203: Drosselklappe
- 205: Schalldämpfer
- 207: Kühlsystem
- 209: Schnittstelle für Kühlung in Brennstoffzelle
- 211: Kühlmedium
- 213: Dreiwegeventil
- 215: Wärmesenke
- 217: Kühlpumpe
- 219: Elektrisches System
- 221: Schnittstelle zu elektrischem System in Brennstoffzelle
- 223: Durch Brennstoffzelle erzeugte elektrische Energie
- 225: Brennstoffzellen-Boost-Konverter
- 227: Inverter
- 229: Elektromotor
- 231: Batterie-Konverter
- 233: Batterie
- 235: Kompressor Inverter

- A: Stellrichtung / Einströmrichtung
- S: Schließrichtung
- R: Radialrichtung
- U: Umfangsrichtung
- B: Rotationssymmetrieachse

## Patentansprüche

1. Partikelabscheider zum Reinigen eines mit Partikeln, wie Fluidpartikeln, beladenen Gasstroms, umfassend:
- einen Gasstrom-Eingang, an dem der Gasstrom mit einer Einströmrichtung in den Partikelabscheider gelangt;
- einen Gasstrom-Ausgang, an dem der Gasstrom den Partikelabscheider verlässt;
- einen Schließzustand, in dem bis auf eine Leckageströmung eine Gasströmung vom Gasstrom-Eingang zum Gasstrom-Ausgang unterbunden ist;
- wenigstens einen Öffnungszustand, in dem zusätzlich zur Leckageströmung eine Großvolumenströmung vom Gasstrom-Eingang zum Gasstrom-Ausgang zugelassen ist;
- einen zwischen dem Gasstrom-Eingang und dem Gasstrom-Ausgang angeordneten Ablenkleitungskanal, der die Großvolumenströmung und/oder die Leckageströmung um wenigstens 90° in Bezug auf die Einströmrichtung ablenkt; und
- ein Textil, insbesondere Vlies, das derart angeordnet ist, dass wenigstens ein Teil der abgelenkten Großvolumenströmung und/oder der abgelenkten Leckageströmung auf das Textil trifft.

2. Partikelabscheider nach Anspruch 1, wobei der Ablenkleitungskanal die Großvolumenströmung und/oder die Leckageströmung um wenigstens 100°, 110°, 120°, 130° oder wenigstens 140°, insbesondere um im Wesentlichen 180°, in Bezug auf die Einströmrichtung ablenkt, und/oder der so eingestellt ist, dass er sich bis zu einem Volumenstrom von 30 l/min des zu reinigenden Gasstroms in dem Schließzustand befindet.

3. Partikelabscheider, insbesondere nach einem der vorstehenden Ansprüche, zum Reinigen eines mit Partikeln, wie Fluidpartikeln, beladenen Gasstroms, umfassend:
- einen Gasstrom-Eingang, an dem der Gasstrom in den Partikelabscheider gelangt;
- einen Gasstrom-Ausgang, an dem der Gasstrom den Partikelabscheider verlässt;
- einen zwischen dem Gasstrom-Eingang und dem Gasstrom-Ausgang angeordneten Leitungskanal; und
- ein in dem Leitungskanal angeordnetes Textil, insbesondere Vlies, das mit einer das Anhaften von Partikeln an dem Textil reduzierenden Beschichtung versehen ist.

4. Partikelabscheider nach Anspruch 3, wobei die Beschichtung durch Besprühen oder Beschichten, vorzugsweise Bedrucken, oder durch Tränken des Textils aufgebracht ist und/oder wobei die Beschichtung eine Silan-basierte Lösung, beispielsweise ein flüssiger oder pulverförmiger Beschichtungsstoff, insbesondere ein Lack, wie ein Silizium-Lack ist, und/oder wobei das Textil ein Polyestermaterial, insbesondere thermoplastischen Kunststoff, wie PET oder PTFE, umfasst.

5. Partikelabscheider, insbesondere nach einem der vorstehenden Ansprüche, zum Reinigen eines mit Partikeln, wie Fluidpartikeln, beladenen Gasstroms, umfassend:
- einen Gasstrom-Eingang, an dem der Gasstrom mit einer Einströmrichtung in den Partikelabscheider gelangt;
- einen Gasstrom-Ausgang, an dem der Gasstrom den Partikelabscheider verlässt;
- einen Gasstromteiler, der dazu ausgebildet ist den Gasstrom in wenigstens zwei Teilgasströme, insbesondere in eine Leckageströmung und eine Großvolumenströmung, zu unterteilen;
- eine stromabwärts des Gasstromteilers angeordnete Ablenkleitungsstruktur, die einen Teilgasstrom stärker ablenkt als wenigstens einen weiteren Teilgasstrom;
- ein Textil, insbesondere Vlies, das derart angeordnet ist, dass wenigstens ein Teil des stärker abgelenkten Gasstroms auf das Textil trifft, und ein weiteres Textil, insbesondere Vlies, das derart angeordnet ist, dass wenigstens ein Teil des weniger stark abgelenkten Gasstroms auf das weitere Textil trifft.

6. Partikelabscheider nach Anspruch 5, wobei die Ablenkleitungsstruktur den stärker abgelenkten Teilgasstrom um wenigstens 90°, insbesondere um wenigstens 100°, 110°, 120°, 130° oder wenigstens 140°, insbesondere um im Wesentlichen 180°, in Bezug auf die Einströmrichtung ablenkt.

7. Partikelabscheider nach einem der vorstehenden Ansprüche, wobei der Ablenkleitungskanal, der Leitungskanal, der Gasstromteiler und/oder die Ablenkleitungsstruktur wenigstens abschnittsweise durch ein bewegbares Ventilglied zum Einstellen des den Partikelabscheider durchströmenden Volumenstroms gebildet sind/ist, wobei insbesondere das Ventilglied in den Schließzustand vorgespannt, insbesondere federvorgespannt, ist, und/oder ferner umfassend einen den Gasstrom-Eingang begrenzenden Ventilsitz und ein Ventilglied, das zwischen einer Schließstellung, in der das Ventilglied in einen Anschlagkontakt mit dem Ventilsitz gebracht ist, und wenigstens einer Öffnungsstellung verlagerbar ist, in der das Ventilglied aus dem Anschlagkontakt in einer axialen Stellrichtung bewegt ist, und einen dem zu reinigenden Gasstrom zugewandten rotationsförmigen Napf aufweist, wobei insbesondere das Ventilglied einen an den Napf anschließenden rotationsförmigen Umlenkschirm aufweist, der den Gasstrom in der wenigstens einen Öffnungsstellung in Richtung des Textils umlenkt, wobei insbesondere der Umlenkschirm derart gestaltet ist, dass er den Gasstrom um wenigstens 90°, insbesondere um wenigstens 100°, 110°, 120°, 130° oder wenigstens 140°, insbesondere um im Wesentlichen 180°, in Bezug auf die Einströmrichtung ablenkt, wobei insbesondere der Umlenkschirm sich entgegen der axialen Stellrichtung axial um weniger als 60%, insbesondere weniger als 55% oder weniger als 50%, einer Axialabmessung des Napfes erstreckt.

8. Partikelabscheider nach einem der vorstehenden Ansprüche, ferner umfassend ein den Ventilsitz aufweisendes Anströmgehäuseteil mit einer Textilaufnahme, insbesondere Vertiefung, für das Textil, wobei insbesondere der Partikelabscheider ferner ein dem Anströmgehäuseteil gegenüberliegendes Deckelgehäuseteil mit einer Textilaufnahme, insbesondere Vertiefung, für ein weiteres Textil, insbesondere für das weitere Textil gemäß Anspruch 7 oder 8, aufweist, wobei insbesondere die Textilaufnahme des Anströmgehäuseteils so dimensioniert und/oder angeordnet ist, dass bei einem Partikelabscheider gemäß einem der Ansprüche 1 bis 3 sowohl die Leckageströmung in dem Schließzustand als auch die Großvolumenströmung in dem wenigstens einen Öffnungszustand in Richtung der Textilaufnahme strömt, bei einem Partikelabscheider gemäß einem der Ansprüche 4 bis 6 der Gasstrom in Richtung der Textilaufnahme strömt, und/oder bei einem Partikelabscheider gemäß einem der Ansprüche 7 bis 8 einer der zwei Teilgasströme in Richtung der Textilaufnahme strömt.

9. Partikelabscheider nach einem der Ansprüche 7 bis 8, wobei das Ventilglied derart bewegbar und/oder dimensioniert ist, dass es frei von einem Anschlagkontakt mit dem Textil ist, wobei insbesondere das Anströmgehäuseteil insbesondere benachbart der Textilaufnahme einen Anschlagflansch aufweist, mit dem das Ventilglied insbesondere in dem Schließzustand in einen Anschlagkontakt geraten kann.

10. Partikelabscheidungssystem umfassend wenigstens zwei nach einem der vorstehenden Ansprüche ausgebildete Partikelabscheider zum Reinigen eines mit Partikeln, wie Fluidpartikeln, beladenen Gasstroms, wobei die Partikelabscheider fluidal miteinander in Verbindung stehen.

11. Partikelabscheidungssystem nach Anspruch 10, wobei die wenigstens zwei Partikelabscheider derart miteinander fluidal in Verbindung stehen, dass der zu reinigende Gasstrom stromaufwärts des Partikelabscheidungssystems in die wenigstens zwei Partikelabscheider aufteilbar ist und/oder ein Gasstrom von einem Partikelabscheider in wenigstens einen weiteren Partikelabscheider gelangen kann.

12. Verfahren zum Reinigen eines mit Partikeln, wie Fluidpartikeln, beladenen Gasstroms, bei dem der Gasstrom in einen nach einem der Ansprüche 1 bis 9 ausgebildeten Partikelabscheider und/oder ein nach einem der Ansprüche 10 bis 11 ausgebildetes Partikelabscheidungssystem eingeleitet wird.

13. Verfahren nach Anspruch 12, bei dem der Partikelabscheider bis zu einem Gasstrom von 30 l/min in einem Schließzustand, insbesondere dem Schließzustand gemäß einem der Ansprüche 1 bis 3, verbleibt, bei einem Gasstrom von mehr als 30 l/min und höchstens 70 l/min in einen teilweise geöffneten Zustand, insbesondere in den wenigstens einen Öffnungszustand gemäß einem der Ansprüche 1 bis 3, verbracht wird und/oder ab einem Gasstrom von mehr als 70 l/min in einen vollständig geöffneten Zustand verbracht wird, und/oder
bei dem der Partikelabscheider in Abhängigkeit des Gasstromvolumens zwischen dem Schließ- und dem wenigstens einen Öffnungszustand verlagert wird, und/oder das zum Betreiben einer nach einem der Ansprüche 1 bis 15 ausgebildeten Partikelabscheider und/oder eines nach einem der Ansprüche 16 bis 17 ausgebildeten Partikelabscheidungssystems eingerichtet ist.

14. Brennstoffzellensystem für ein Kraftfahrzeug, umfassend eine Brennstoffzelle und einen in einem Partikel führenden Leitungssystem angeordneten, nach einem der vorstehenden Ansprüche ausgebildeten Partikelabscheider, wobei insbesondere das Leitungssystem einen partikelbeladenen Gasstrom der Brennstoffzelle führt.

15. Brennstoffzellenfahrzeug mit einem Brennstoffzellensystem nach Anspruch 14.

16. Kurbelgehäuseentlüftungssystem für ein Kraftfahrtzeug, umfassend ein Kurbelgehäuse mit einer Strömungsaustrittsöffnung zum Abführen von Blow-By-Gasen aus dem Kurbelgehäuse und ein Partikelabscheider nach einem der Ansprüche 1 bis 9 oder ein Partikelabscheidungssystem nach einem der Ansprüche 10 bis 11, der/das zum Reinigen der Blow-By Gase von Ölpartikeln fluidal mit der Strömungsaustrittsöffnung in Verbindung steht.
